# EUROPÄISCHE PATENTSCHRIFT

(11) **EP 1 204 504 B1**
(45) Veröffentlichungstag und Bekanntmachung des Hinweises auf die Patenterteilung: **22.10.2003**
(21) Anmeldenummer: 99968781.7
(22) Anmeldetag: 06.11.1999
(51) Int. Cl.: B23B 41/12, B23B 41/02, B23Q 1/48, B23Q 1/62

(54) **TIEFBOHREINRICHTUNG**
DEEP DRILLING DEVICE
DISPOSITIF DE PERCAGE PROFOND

(30) Priorität: 17.08.1999 DE 19938856
(43) Veröffentlichungstag der Anmeldung: 15.05.2002
(73) Patentinhaber: TBT Tiefbohrtechnik GmbH, 72576 Dettingen (DE)
(72) Erfinder: NAGEL, Bernd, D-72622 Nürtingen (DE); RANDECKER, Hermann, D-72581 Dettingen (DE)
(74) Vertreter: Patentanwälte Ruff, Wilhelm, Beier, Dauster & Partner
(86) Internationale Anmeldenummer: EP9908531
(87) Internationale Veröffentlichungsnummer: WO01012370

(56) Entgegenhaltungen:
- DE-U- 29 907 963
- JP-A- 59 232 707
- US-A- 5 759 140

## Beschreibung

Die Erfindung betrifft eine Tiefbohreinrichtung zum Bohren von Bohrungen in Werkstücken, insbesondere Kurbelwellen, gemäß dem Oberbegriff von Anspruch 1, wobei die Bohrungen an unterschiedlichen Positionen und/oder in unterschiedlichen Ausrichtungen relativ zu einer Werkstücklängsachse einbringbar sind.

Bekanntlich werden Kurbelwellen für Verbrennungsmotoren von Luft- oder Landfahrzeugen, Schiffen oder stationären Einrichtungen häufig mit einer Vielzahl von Bohrungen versehen, die an unterschiedlichen Positionen und/oder in unterschiedlichen Ausrichtungen relativ zur Kurbelwellenlängsachse liegen und beispielsweise als Ölbohrungen dienen können. Bei der Massenherstellung derartiger Werkstücke werden häufig Transferstraßen mit mehreren Arbeitsstationen genutzt, wobei in jeder Arbeitsstation ein oder mehrere Löcher bestimmter Ausrichtung und Position in das Werkstück eingebracht werden. Eine Umrüstung derartiger Transferstraßen zur Fertigung von Werkstücken, bei denen die Bohrungen bzgl. Ausrichtung und/oder Position anders liegen, ist kompliziert, zeitaufwendig und teuer. Insbesondere für die Fertigung von kleineren Serien besteht daher seit langem der Wunsch nach flexibler einsetzbaren Einrichtungen, die vorzugsweise auch bzgl. ihres Platzbedarfes günstiger sind als Transferstraßen.

Es sind schon Vorrichtungen bekannt, die eine Verdrehung der Kurbelwelle um ihre Längsachse und eine Verschwenkung der Längsachse ermöglichen, um die Bohrung unterschiedlich ausgerichteter und/oder positionierter Bohrungen in einer speziell ausgelegten Tiefbohreinrichtung zu ermöglichen.

Eine Einrichtung dieser Art, die eine Drehung der Kurbelwelle um ihre Längsachse und eine einseitige Schwenkung der Kurbelwelle aus einer horizontalen Grundposition um eine horizontale Kippachse vorsieht, um

Bohrungen unterschiedlicher Ausrichtung und/oder Position zu ermöglichen, ist z.B. in der internationalen Patentanmeldung WO 96/33043 gezeigt. Die Konstruktion dieser Anlage ist aufwendig und sie hat eine beträchtliche Baugrösse. Ihre Handhabung ist umständlich.

Eine andere Einrichtung der genannten Art ist im deutschen Gebrauchsmuster DE 29907963 U1 gezeigt. Die Einrichtung erlaubt es, Kurbelwellen mit horizontaler Längsachse einzuspannen und zur Einstellung unterschiedlicher Bohrungswinkel um eine vertikale Achse zu verschwenken.

Der Erfindung liegt die Aufgabe zugrunde, eine Tiefbohreinrichtung der eingangs genannten Art zu schaffen, die besonders günstig und übersichtlich aufgebaut ist. Insbesondere soll eine Fertigung mit höherer Produktivität ermöglicht werden.

Diese Aufgabe wird erfindungsgemäss durch eine Tiefbohreinrichtung mit den Merkmalen von Anspruch 1 gelöst.

Eine erfindungsgemässe Tiefbohreinrichtung hat zwei Funktionseinheiten, die jeweils sehr einfach und übersichtlich aufgebaut sein können und auf zweckmässige Weise zusammenwirken. Die Funktionseinheiten können auf einem gemeinsamen Maschinengestell oder, insbesondere bei Anlagen für grössere Werkstücke, auf zwei gesonderten Maschinengestellen angebracht sein. Eine Tiefbohreinheit hat mindestens einen Spindelstock mit mindestens einer durch einen Spindelantrieb um eine horizontale Spindelachse (Z-Achse) drehbaren Arbeitsspindel zur Aufnahme eines parallel zur Spindelachse (in Z-Richtung) verschiebbaren Tiefbohrwerkzeuges.

Eine von der Tiefbohreinheit gesonderte Werkstückhalteeinheit hat eine erste Teileinrichtung zum Halten mindestens eines Werkstückes und zum Drehen des Werkstückes um seine Werkstückslängsachse (A-Achse). Eine zweite Teileinrichtung dient zur Drehung des Werkstückes, insbesondere der ersten Teileinrichtung, um eine senkrecht zur Werkstückslängsachse ausgerichtete Drehachse (B-Achse). Die Werkstückhalteeinheit beinhaltet somit alle Funktionen, die zum Schwenken des Werkstückes erforderlich sind, wobei durch Drehungen um die A-Achse unterschiedliche Umfangsabschnitte des Werkstückes dem Tiefbohrwerkzeug zugewandt werden können und durch Drehungen um die B-Achse unterschiedliche Kippwinkel der Bohrungen relativ zur Werkstücklängsachse einstellbar sind. Insbesondere bei Anlagen für grössere Werkstücke kann zur Vermeidung übermässig grosser Axialbewegungen vorgesehen sein, auch die werkzeugtragenden Teile der Tiefbohreinheit um eine vertikale Achse (B2-Achse) verschwenkbar auszubilden.

Weiterhin sind zur Relativverschiebung von Werkstück und Tiefbohrwerkzeug erste, zweite und dritte Positioniereinrichtungen vorgesehen, um Parallelverschiebungen zwischen Werkstück und Tiefbohrwerkzeug bzgl. orthogonaler Achsen zu ermöglichen. Dabei bewirkt die erste Positioniereinrichtung Verschiebungen parallel zu einer horizontalen ersten Achse (X-Achse), wobei diese Verschiebungen dazu dienen, Bohrungen an unterschiedlichen Positionen entlang der Längsachse des Werkstückes einzubringen. Die X-Achse verläuft in der Regel senkrecht zur Spindelachse, kann aber auch, z.B. bei Ausführungen mit horizontal verschwenkbarer Spindelachse, allgemein quer zu dieser verlaufen. Die mittels der zweiten Positioniereinrichtung möglichen Verschiebungen parallel zu einer vertikalen zweiten Achse (Y-Achse) senkrecht zur Spindelachse, können dazu dienen, einen seitlichen Versatz bzw. Offset einer Bohrung relativ zur Werkstücklängsachse einzustellen. Die mittels der dritten Positioniereinrichtung möglichen Verschiebungen parallel zu einer dritten Achse (W-Achse) können zur Abstandsänderung zwischen Werkstück und Tiefbohrwerkzeug genutzt werden, um beispielsweise vor dem Bohrvorgang das Tiefbohrwerkzeug bzw. eine ggf. vorhandene Werkzeugführung des Werkzeuges zur Anlage mit der dem Werkzeug zugewandten Werkstückoberfläche zu bringen. Die W-Achse verläuft in der Regel parallel zur Spindelachse, kann aber auch, z.B. bei Ausführungen mit horizontal verschwenkbarer Spindelachse, allgemein in spitzem Winkel zu dieser verlaufen.

Beim Bohren insbesondere von schrägen Bohrungen können am Übergang zwischen Bohrung und Werkstückmantelfläche unter Umständen schmale Materialgrate entstehen, die insbesondere nach dem Härten von Kurbelwellen so spröde sein können, dass sie im Betrieb von der Kurbelwelle abreißen können. Dadurch könnten erhebliche Motorschäden entstehen. Zur Vermeidung dieser Gefahr ist es daher zweckmässig, die Eintritts- und Austrittsbereiche von Bohrungen z.B. durch Ansenken nachzubearbeiten, was herkömmlich in gesonderten Senkstationen durchgeführt wird. Tiefbohreinrichtungen gemäss der Erfindung zeichnen sich dagegen dadurch aus, dass sie eine integrierte Bohrungsendbearbeitungseinrichtung zur Bearbeitung der Endbereiche, also der Eintrittsbereiche und/oder Austrittsbereiche von Bohrungen an der Werkstückmantelfläche aufweisen. Gesonderte Senkstationen können dadurch entfallen und die numerischen Vorgaben für die Bohrung können auch für die Endbearbeitung der Bohrungsendbereiche genutzt werden. Hierdurch lässt sich die Produktivität steigern. Der Begriff "Senken" bei erfindungsgemäßen Einrichtungen umfasst nicht nur das herkömmliche Senken mit einem Senkwerkzeug, dessen Spitzendurchmesser größer als der Bohrungsdurchmesser ist, sondern auch den Einsatz von Zirkularfräsern, die z.B. den gekrümmten, elliptischen Randbereich schräger Bohrungen in Umfangsrichtung ablaufen und dabei entgraten. Vorzugsweise ist vorgesehen, dass die Bohrungsendbearbeitungseinrichtung mindestens eine Senkpinole mit mindestens einem parallel zur Spindelachse verfahrbaren Senkwerkzeug aufweist, das vorzugsweise über einen eigenen Antrieb antreibbar ist. Die Senkpinole kann fest mit einem Werkzeugführungsträger bzw. Bohrbuchsenträger verbunden und/oder mit diesem quer zur Spindelachse beweglich sein. Sie kann zur Vermeidung gegenseitiger Beeinträchtigungen von Bohrbuchse und Senkeinrichtung sowohl in horizontaler, als auch in vertikaler Richtung gegenüber der zugeordneten Bohrbuchse versetzt sein. Die Senkpinole fährt das Senkwerkzeug von der Wartestellung ausserhalb des Kollisionsbereiches in die Arbeitsstellung (am Werkstück). Der Bearbeitungsvorschub des Senkwerkzeuges erfolgt durch Verfahren des Werkstücks entlang der W-Achse.

Für Fälle, in denen es gewünscht ist, eine gefertigte Durchgangsbohrung einseitig zu verschließen, kann auch eine Bohrungsverschlusseinrichtung vorgesehen sein, die vorzugsweise derart ausgebildet, dass zunächst z.B. durch einen Bohrvorgang mit größerem Bohrwerkzeug eine Durchmessererweiterung begrenzter Tiefe eines Bohrungsendabschnittes erzeugt wird, das danach ein vorzugsweise kugelförmiger, metallischer Verschlusskörper in die Durchmessererweiterung eingesetzt wird und dass danach der Verschlusskörper in der Durchmessererweiterung festgesetzt wird, indem beispielsweise in einem Stemmvorgang das die Kugel umgebende Material des Werkstückes unter Einklemmung der Kugel plastisch verformt wird.

Vorzugsweise ist der Spindelstock Teil einer Werkzeugträgereinrichtung, die als weiteres Element eine axial zum Spindelstock versetzt angeordnete Werkzeugführungseinrichtung zur Führung des Tiefbohrwerkzeuges sowie eine zugeordnete Werkzeugverschiebeeinrichtung zur Bewegung des Tiefbohrwerkzeuges relativ zur Werkzeugführungseinrichtung parallel zur Spindelachse aufweist.

Vorzugsweise ist die erste Teileinrichtung zum Halten mindestens eines Werkstücks mit horizontal ausgerichteter Werkstückslängsachse und die zweite Teileinrichtung zur Drehung des Werkstücks, insbesondere der ersten Teileinrichtung, um eine vertikale Drehachse (B-Achse) ausgebildet. Dieser Aufbau, bei dem das Werkstück unabhängig vom Drehwinkel um die vertikale B-Achse mit seiner Werkstücklängsachse immer im wesentlichen horizontal ausgerichtet ist, hat zahlreiche grosse Vorteile. So kann z.B. als Tiefbohreinheit eine Standard-Tiefbohreinheit verwendet werden, die beispielsweise die ersten und zweiten Positioniereinrichtungen für die Verschiebung in X-Richtung und Y-Richtung schon enthält. Erforderlichenfalls können auch existierende Tiefbohreinheiten mit Schwenkmöglichkeit für die Spindelachse um eine vertikale B2-Achse genutzt werden. Die Werkstückhalteeinheit kann unter Verwendung eines bei moderneren Tiefbohrzentren ohnehin meist vorhandenen Drehtisches aufgebaut werden, der als Teil der zweiten Teileinrichtung zur Drehung des Werkstückes um die B-Achse nutzbar ist. Der Drehtisch kann horizontal parallel oder in spitzem Winkel zur Spindelachse verfahrbar sein, um eine Abstandsänderung zwischen Werkstück und Tiefbohreinheit zu ermöglichen. Der Grundaufbau erfindungsgemässer Anlagen kann also kostengünstig weitgehend unter Verwendung zweckmässig kombinierter, an sich vorhandener Teilanlagen erfolgen.

Wegen der ausschließlich horizontalen Halterung der Werkstücke ist ein in Vertikalrichtung relativ kompakter bzw. gedrungener Aufbau ohne hoch hinausragende Teile möglich, wodurch die Schwingungsanfälligkeit der Anlage herabgesetzt und damit die Bohrgenauigkeit erhöht werden kann. Für eine ggf. gewünschte Mehrfachbearbeitung, bei der beispielsweise zwei oder mehr Kurbelwellen gleichzeitig auf gleiche Weise bearbeitet werden, können die Werkstücke bequem übereinander angeordnet werden. Zur Be- und Entladung kann die Werkstückhalteeinheit mittels der zweiten Teileinrichtung in eine Beladeposition gedreht bzw. gefahren werden, bei der die Werkstücklängsachsen beispielsweise etwa parallel zur Spindelachse liegen und in der eine bequeme seitliche Be- und Entladung in horizontaler Richtung möglich ist. Diese Vorgänge lassen sich einerseits besonders einfach mittels entsprechender Be- und Entladeeinheiten automatisieren. Insbesondere sind diese Vorgänge aber auch bequem manuell durchführbar, da die ggf. schweren und langen Kurbelwellen etc. nur horizontal zu halten sind und nicht aufgerichtet oder schräg gestellt werden müssen. Die Ergonomie wird dadurch im Vergleich zu bekannten Anlagen deutlich verbessert.

Die horizontale Halterung der Werkstücke ermöglicht es auch auf einfache Weise, dass sie, bezogen auf die Richtung der Spindelachse, in zwei gegenläufige Horizontatrichtungen verschwenkt werden können. Ausgehend von einer Grundstellung, bei der die Spindelachse senkrecht zur Werkstücklängsachse steht und bei der z.B. radial ausgerichtete Bohrungen einbringbar sind, können Kippungen der Bohrungen zu beiden Längsenden der Werkstücke einfach erreicht werden. Damit kann das bei herkömmlichen Einrichtungen hierfür erforderliche Umspannen der Werkstücke entfallen, was erhebliche Produktivitätssteigerungen ermöglicht.

Obwohl es möglich ist, die dritte Positioniereinrichtung zur Abstandsänderung zwischen Tiefbohreinheit und Werkstückhalteeinheit beispielsweise als Linearführung der Tiefbohreinheit auszugestalten, ist bei einer bevorzugten Ausführungsform die dritte Positioniereinrichtung der Werkstückhalteeinheit zugeordnet. Sie kann eine parallel zur Spindelachse bzw. zur Spindelachsengrundausrichtung ausgerichtete dritte Linearführungseinrichtung zur Führung der Werkstückhalteeinheit relativ zum Maschinengestell der Tiefbohreinrichtung aufweisen. Dann kann ein einfacher Aufbau der Tiefbohreinheit genutzt werden, der nur Führungseinrichtungen in X-Richtung und Y-Richtung, nicht jedoch zur Verschiebung der Werkzeugträgereinrichtung als Ganzes im wesentlichen parallel zur Spindelachse aufweist. Im Rahmen der Erfindung ist es im übrigen auch möglich, auch die erste und/oder die zweite Positioniereinrichtung der Werkstückhalteeinrichtung zuzuordnen, indem beispielsweise entsprechende Linearführung zur horizontalen Querverschiebung des Drehtisches senkrecht zur Spindelachse und/oder zur vertikalen Verschiebung senkrecht zur Spindelachse vorgesehen werden.

Eine Weiterbildung zeichnet sich dadurch aus, dass die Tiefbohreinheit eine Einrichtung zur Drehung der Spindelachse bzw. einer vorzugsweise vorhandenen Werkzeugträgereinrichtung um eine vertikale Drehachse (B1-Achse) aufweist. Die hierdurch mögliche horizontale Verschwenkung der Tiefbohrwerkzeuge und der sie tragenden Bauteile ist besonders vorteilhaft, wenn stark gegen die Werkstücklängsachse gekippte Bohrungen einzubringen sind, da zur Einstellung der erforderlichen Schrägstellungen sowohl die Werkstücke, als auch die Werkzeuge verschwenkt werden können, so dass extreme Drehstellungen des Werkstückträgers vermieden werden können.

Um die vorzugsweise vorgesehenen, meist als Bohrbuchsen bezeichneten Werkzeugführungen den jeweiligen Werkstück- bzw. Kurbelwellenkonturen anpassen zu können und/oder um sie an unterschiedliche Bohrwerkzeugdurchmesser anpassen zu können, kann eine Werkzeugführungs-Wechseleinrichtung zum automatischen Auswechseln von Werkzeugführungen an der Werkzeugführungseinheit vorgesehen sein. Ein Pickup-Magazin oder ein Scheiben- oder Kettenmagazin der Werkzeugführungs-Wechseleinrichtung kann der Werkstückhalteeinheit zugeordnet und insbesondere fest an dieser angeordnet und daher mit dieser zum Beispiel parallel zur Spindelachse verfahrbar sein. Dadurch wird ein Bohrbuchsenwechsel bei in Spindelachsenrichtung unbeweglicher Werkzeugführungseinrichtung möglich, indem die Werkzeugführungseinrichtung und die Werkzeugführungs-Wechseleinrichtung axial zueinander ausgerichtet und dann durch Verfahren der Werkstückhalteeinheit zum Bohrbuchsenwechsel zueinandergebracht werden können.

Es ist auch möglich, an der Werkzeugführungseinrichtung bewegliche, insbesondere linear verfahrbare Gruppen von Werkzeugführungen bzw. Bohrbuchsen vorzusehen, die z.B. an einem gemeinsamen Träger angeordnet sein können. Es reicht dann zum Bohrbuchsenwechsel aus, den Träger so zu verfahren, dass die jeweils gewünschten Bohrbuchsen im Bereich der Spindelachse angeordnet wird. Ein bevorzugter dreifach-Linearwechsler für eine zweispindlige Einrichtung wird bei den Ausführungsformen näher beschrieben.

Zweckmässig ist auch eine Werkzeugwechseleinrichtung zum automatischen Aus- und Einwechseln von Tiefbohrwerkzeugen an der Arbeitsspindel vorgesehen. Die Werkzeugwechseleinheit kann beispielsweise in Form eines Pickup-Magazins für Werkzeuge fest am Maschinengestell der Tiefbohreinrichtung angebracht sein. Nach entsprechender axialer Ausrichtung von Spindelstock und Magazin zum Beispiel mittels Verschiebung der Werkzeugträgereinrichtung in X-Richtung kann der Werkzeugwechsel unter Verfahren des Spindelstockes in Spindelachsenrichtung durchgeführt werden. Zweckmäßig sind die Werkzeugführungs-Wechseleinrichtungen und die Werkzeug-Wechseleinrichtung derart ausgebildet und angeordnet, dass eine Auswechslung von Tiefbohrwerkzeuge und zugeordneten Werkzeugführungen zeitgleich durchführbar ist, wozu die Einrichtungen in entsprechendem Axialabstand und in einander entsprechender Höhe angeordnet sein können.

Da in der Regel auch Durchgangsbohrungen herzustellen sind, ist bei einer bevorzugten Ausführungsform eine Abdichteinrichtung zur Abdichtung von Durchtrittsstellen von Tiefbohrwerkzeugen beim Bohren des Werkstückes vorgesehen. Dadurch kann verhindert werden, dass das Kühlmittel, vermischt mit Bohrspänen, beim Durchbruch des Bohrers auf der dem Werkzeug abgewandten Seite herausspritzt, die Vorrichtung verschmutzt und den Bohrer unter Umständen trockenlaufen lässt, was zu vorzeitigem Bohrerverschleiß führen könnte.

Eine besonders zuverlässige Abdichtung ist bei einer Weiterbildung dadurch möglich, dass eine Abdichteinrichtung, die zur Abdichtung eines axialen Werkstückabschnittes, beispielsweise eines Hauptlagers oder eines Hublagers, vorgesehen ist, mindestens eine in dem Abdichtabschnitt an eine Werkstückmantelfläche über einen Umfangsabschnitt anpressbare Abdichtschale aufweist, wodurch sich eine großflächige Abdichtung erreichen lässt, die auch hohen Bohröldrücken widersteht. Die Abdichtschale kann auf der werkstückzugewandten Seite aus Kunststoff bestehen, in den hineingebohrt werden kann. Vorzugsweise sind pro Abdichtabschnitt mehrere Abdichtschalen vorgesehen, wodurch eine in Umfangsrichtung lückenlose Abdichtung erreichbar ist, die praktisch nur den Eintrittsbereich des Werkzeuges freilässt.

Eine besonders hohe Flexibilität und gute Anpassbarkeit an unterschiedliche Kurbelwellengeometrien lässt sich dadurch erreichen, dass Abdichteinrichtungen für unterschiedliche Durchmesser und/oder axiale Längen von Abdichtabschnitten auswechselbar an der Werkstückträgereinrichtung anbringbar sind, wobei die Anbringung vorzugsweise in Axialrichtung an beliebigen Stellen erfolgen kann. Dies ist beispielsweise dadurch möglich, dass Abdichteinrichtungen so gestaltet sind, dass sie an zur Werkstücklängsachse parallelen Halteprofilen eingehängt und mit diesen verrastet werden können.

Es ist bekannt, daß die beim Tiefbohren verwendeten Bohrhilfsmittel schädlich sein können, wenn sie nach der Bearbeitung in nachfolgende Arbeitsstationen verschleppt werden. Daher ist eine Reinigung der fertig bearbeiteten Werkstücke zweckmäßig und wird herkömmlich in gesonderten Reinigungsstationen durchgeführt. Eine bevorzugte Weiterbildung zeichnet sich dadurch aus, daß sie eine integrierte Reinigungseinrichtung zur Befreiung der Werkstücke von festen und flüssigen Bearbeitungsrückständen aufweist. Als besonders zweckmäßig hat sich eine Reinigung ohne fremde Reinigungsmittel wie flüssige Waschmittel o. dgl. herausgestellt. Die Reinigungseinrichtung ist hierzu vorzugsweise als Schleudereinrichtung ausgebildet, in der die Reinigung unter Nutzung von Zentrifugaltkräften hilfsmittelfrei erfolgen kann. Zweckmäßig kann hierzu der Drehantrieb, der für die Drehung der Werkstücke um ihre Längsachse vorgesehen ist, derart ausgebildet sein, daß Drehgeschwindigkeiten von beispielsweise mehr als 500 Umdrehungen pro Minute, insbesondere zwischen ca. 800 Umdrehungen pro Minute und ca. 1.700 Umdrehungen pro Minute durchführbar sind. Derart trocken gereinigte Werkstücke sind in der Regel weitgehend spänefrei und haben allenfalls einen sehr dünnen Restfilm von Bohröl, der in nachfolgenden Einrichtungen nicht schädlich ist.

Zur Erhöhung der Produktivität der Tiefbohreinrichtung ist bei einer bevorzugten Ausführungsform vorgesehen, daß die Werkstückhalteeinheit zur gleichzeitigen Aufnahme von mehreren, insbesondere zwei, gleichzeitig bearbeitbaren Werkstücken ausgebildet ist, die vorzugsweise achsparallel übereinander anordenbar sind. Vorzugsweise ist für jedes Werkstück ein eigener, gesondert steuerbarer Drehantrieb vorgesehen. Insbesondere kann der Aufbau modular sein, wobei für jedes Werkstück ein vollständig und unabhängig funktionsfähiges Modul vorgesehen sein kann, das einen Drehantrieb, Einspannmittel, ggf. Einspannhilfseinrichtungen und ggf. Abdichteinrichtungen und dergleichen aufweist.

Entsprechend kann ein zugeordneter Spindelstock mehrere, insbesondere zwei achsparallel übereinander angeordnete Arbeitsspindeln haben oder es können mehrere übereinander angeordnete Spindelstöcke vorgesehen sein. Eine entsprechende Werkzeugführungseinrichtung kann mehrere, insbesondere zwei, vier, sechs oder acht u.s.w. achsparallel übereinander angeordnete Werkzeugführungen haben. Durch die zweckmäßige Übereinanderanordnung der Werkstücke, Bohrbuchsen, Werkzeuge und Spindeln bei der Mehrfachbearbeitung ist eine Produktivitätssteigerung der Einrichtung ohne weiteres möglich, ohne daß deren horizontale Baumaße gegenüber Einzelbearbeitungseinrichtungen geändert werden müssen oder der vorhandene Bauraum auf dem Maschinengestell zugebaut werden muß.

Weitere Merkmale und Einzelheiten der Erfindung ergeben sich aus der nachfolgenden Beschreibung einer bevorzugten Ausführungsform in Verbindung mit den Zeichnungen und den Unteransprüchen. Hierbei können die einzelnen Merkmale jeweils für sich allein oder zu mehreren in Kombination miteinander bei einer Ausführungsform verwirklicht sein. Ein Ausführungsbeispiel der Erfindung wird in den Zeichnungen dargestellt und im folgenden näher erläutert. In den Zeichnungen zeigen:
- Fig. 1: eine schematische Seitenansicht einer Ausführungsform einer erfindungsgemäßen Tiefbohreinrichtung,
- Fig. 2: eine Draufsicht auf die Tiefbohreinrichtung von Fig. 1,
- Fig. 3: eine Vorderansicht der Tiefbohreinrichtung gemäß Fign. 1 und 2,
- Fig. 4: eine Draufsicht auf eine andere Tiefbohreinrichtung mit gesonderten Maschinengestellen für Tiefbohreinheit und Werkstückhalteeinheit,
- Fig. 5: eine Seitenansicht der Ausführungsform in Fig. 4,
- Fig. 6: eine schrägperspektivische Teilansicht einer bevorzugten Ausführung einer Werkzeugträgereinrichtung mit einem Dreifach-Linear-Bohrbuchsenwechsler und einer integrierten Senkeinrichtung mit Senkpinolen in Kombination mit einer bevorzugten Ausführungsform einer Werkstückhalteeinheit mit gesondert antreibbaren Drehvorrichtungen für Kurbelwellen sowie mit Einrichtungen zum Einrichten der Kurbelwellen und zum Abdichten von Bohrungsstellen,
- Fig. 7: eine Seitenansicht einer auswechselbaren Abdichteinrichtung, die an der Werkstückhalteeinheit gem. Fig. 6 anbringbar ist und
- Fig. 8: eine Seitenansicht einer auswechselbar an der Werkstückhalteeinheit gemäß Fig. 6 anbringbaren Einrichtung zur radialen Ausrichtung von Kurbelwellen vor dem Festspannen in der Werkstückhalteeinheit gemäß Fig. 6.

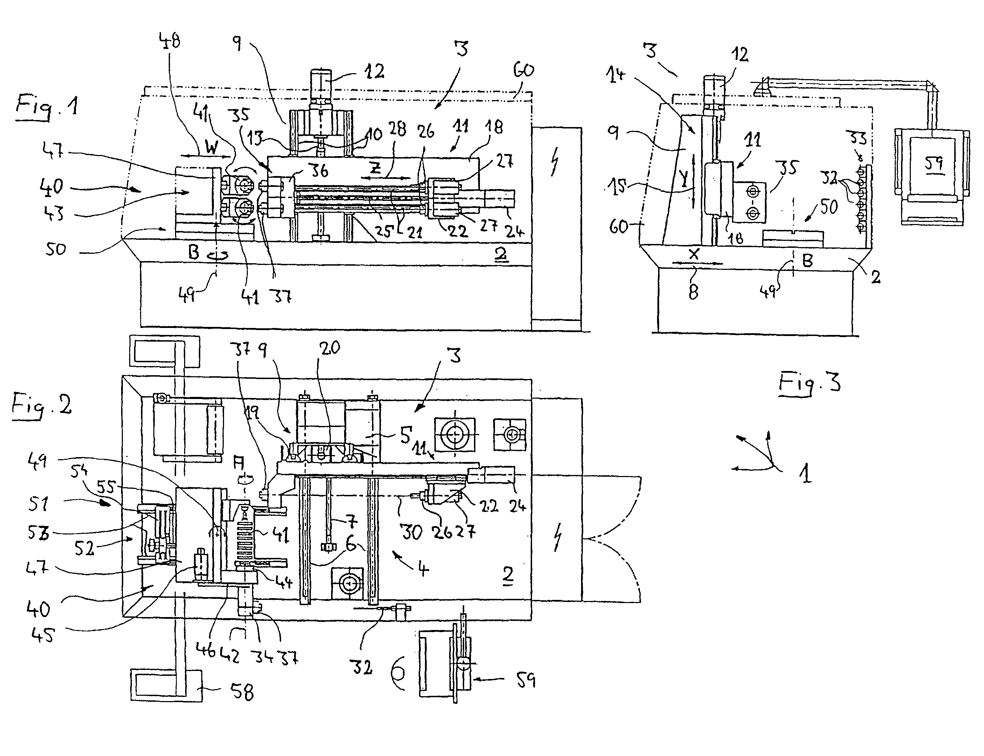

Die in den Fign. 1 bis 3 gezeigte Ausführungsform einer erfindungsgemäßen Tiefbohreinrichtung 1 basiert auf einem Standard-Tiefbohrzentrum, bei dem auf der Oberseite eines Maschinenbettes 2 eine Tiefbohreinheit 3 befestigt ist. Diese hat eine erste Positioniereinrichtung 4 mit einem Querschlitten 5, der auf zwei achsparallelen Linearführungsschienen 6 gleitbeweglich geführt ist und mittels eines (nicht gezeigten) ersten NC-Antriebsmotors über einen ersten Spindeltrieb 7 parallel zu einer horizontalen ersten Achse 8 (X-Achse) verfahrbar ist.

Auf dem Querschlitten erhebt sich ein Ständer 9 mit einem Paar vertikal ausgerichteter, achsparalleler Linearführungsschienen 10, an denen eine Werkzeugträgereinrichtung 11 vertikal beweglich geführt ist. Zum Heben und Senken der Werkzeugträgereinrichtung 11 dient ein an der Oberseite des Ständers angeordneter NC-Motor, z.B. ein Servomotor 12, dessen Motorachse parallel zu den Achsen der Linearführungen 10 verläuft und der über einen zwischen den Führungsschienen 10 angeordneten, vertikalen zweiten Spindeltrieb 13 an der Rückseite der Werkzeugträgereinrichtung 11 angreift. Dadurch ist eine einfach aufgebaute zweite Positioniereinrichtung 14 zur Vertikalverschiebung der Werkzeugträgereinrichtung 11 parallel zu einer vertikalen zweiten Achse 15 geschaffen, die als Y-Achse bezeichnet wird.

Die Werkzeugträgereinrichtung 11 umfaßt einen horizontal langgestreckten, in Form einer vertikalen Platte ausgebildeten Träger 18, an dessen ständerzugewandter Rückseite Führungselemente 19 zum Angreifen an den Linearführungen 10 sowie eine Spindelmutter 20 zum Zusammenwirken mit der vertikalen zweiten Spindel 13 befestigt sind. Auf der gegenüberliegenden Vorderseite verläuft in horizontaler Richtung eine Linearführung mit zwei achsparallelen Führungsschienen 21, auf denen ein Spindelstock 22 linear beweglich geführt ist. Zum Verschieben des Spindelstockes entlang der Linearführung 21 parallel zur horizontalen Z-Achse 28 ist ein weiterer NC-Servormotor 24 vorgesehen, der über eine horizontale Gewindespindel 25 an einer Gewindetriebsmutter an der Unterseite des Spindelstockes angreift.

Im Spindelstock 22 sind mit Abstand übereinanderliegend zwei achsparallele Arbeitsspindeln 26 angeordnet, wobei für jede der Arbeitsspindeln am Spindelstock ein gesondert ansteuerbarer, elektromotorischer Spindelantrieb 27 zur Drehung der Arbeitsspindel um eine horizontale Spindelachse 30 vorgesehen ist. Jede der Arbeitsspindeln hat auf der antriebsabgewandten Seite ein Schnellspannfutter zur Aufnahme eines Tiefbohrwerkzeuges 32. Es gibt auch Ausführungen mit nur einer Spindel oder mit mehr als zwei Spindeln.

In der gezeigten Betriebsstellung der Tiefbohreinrichtung sind keine Tiefbohrwerkzeuge eingespannt. Einige Tiefbohrwerkzeuge sind achsparallel übereinanderliegend in einem später erläuterten Wechselmagazin 33 angeordnet, das seitlich neben der Werkzeugträgereinrichtung an einer vertikalen Trägerplatte am Rand des Maschinenbettes angeordnet ist.

Zur Führung-der in die jeweiligen Arbeitsspindeln eingespannten Tiefbohrwerkzeuge vor, während und nach einem Bohrvorgang ist eine Werkzeugführungseinrichtung 35 vorgesehen, die an dem dem Vorschubantrieb 24 gegenüberliegenden Ende fest an der Trägerplatte 18 angebracht ist und einen Bohrbuchsenträger 36 zur Aufnahme von auswechselbaren Bohrbuchsen bzw. Werkzeugführungen 37 hat.

Die beschriebene bevorzugte Tiefbohreinheit ermöglicht es, durch rechtwinklig zueinander verlaufende Bewegungen der Werkzeuge parallel zur X-Achse bzw. zur Y-Achse die Werkzeuge zur Einnahme einer Bearbeitungsposition senkrecht zur Werkzeuglängsachse parallel zu verschieben. Weiterhin ist durch die Verschiebung des Spindelstockes in Richtung auf die Werkzeugführungseinrichtung 35 oder von dieser weg eine Axialverschiebung des Werkzeuges in Z-Achsen-Richtung möglich. Dieser Arbeitsvorschub des Tiefbohrwerkzeuges ist möglich, ohne daß größere Massen der Tiefbohreinheit, beispielsweise die Werkzeugträgereinrichtung als Ganzes, verschoben werden müßte. Der Bearbeitungsvorschub erfolgt durch Linearverschiebung des Spindelstockes, also durch eine dem Werkzeug zugeordnete Z-Achse 28.

Zum Halten der zu bohrenden Werkstücke sowie zur richtigen Ausrichtung der Werkstücke in Bezug auf die Werkzeug- bzw. Spindelachse ist eine Werkstückhalteeinheit 40 vorgesehen, die im gezeigten Beispiel zwei Kurbelwellen 41 trägt, deren Längsachsen 42 parallel zueinander horizontal ausgerichtet sind. Die Werkstückhalteeinheit hat im wesentlichen zwei funktionell zusammenwirkende Teileinrichtungen. Eine erste Teileinrichtung 43 dient zum Halten der Werkstücke mit horizontal ausgerichteter Werkstücklängsachse und zum Drehen der Werkstücke um die auch als A-Achse bezeichnete Werkstücklängsachse. Im gezeigten Beispiel sind hierzu die Kurbelwellen 41 in Spannfuttern 44 aufgenommen, die von einem Schwenkantrieb 45 mit z.B. über einen Zahnriemen 46 oder eine Kette oder ein Stirnrad drehbar sind. Für jede Kurbelwelle ist ein gesonderter, unabhängig vom anderen Motor steuerbarer Antrieb vorgesehen. Auf der Gegenseite können die Werkstücke auf Spitzen oder in Spannfuttern gelagert sein. Die beschriebenen Elemente sind an einem im Querschnitt L-förmigen Träger 47 an dessen vertikalem Schenkel befestigt. Der Träger ist auf einem in Fig. 3 gut zu erkennenden Drehtisch 50 befestigt, der Teil einer zweiten Teileinrichtung der Werkstückhalteeinheit ist und um eine vertikale Drehachse 49, im folgenden auch B-Achse, drehbar ist. Durch die Nutzung eines ggf. ohnehin vorhandenen Drehtisches einer Tiefbohreinrichtung können herkömmliche Tiefbohreinrichtungen auf zweckmäßige und kostengünstige Weise zu einer erfindungsgemäßen Tiefbohreinrichtung aufgewertet werden, indem eine geeignete erste Teileinrichtung am Drehtisch befestigt wird.

Der Drehtisch ist mittels einer dritten Positioniereinrichtung 51 parallel zu einer dritten Achse bzw. W-Achse 48 verschiebbar, die parallel zur Spindelachse 30 ausgerichtet ist. Hierzu ist der Drehtisch auf einer dritten Linearführungseinrichtung 52 angeordnet, die zwei auf dem Maschinenbett befestigte, achsparallel zueinander horizontal angeordnete Führungsschienen 53 umfaßt, auf denen das Drehtellerunterteil geradlinig verschiebbar geführt ist. Zur Verschiebung der Kurbelwellenspannvorrichtung in W-Richtung ist ein Antriebsmotor 54 vorgesehen, der eine Gewindespindel 55 dreht, auf der eine an der Unterseite des Drehtisches befestigte Mutter läuft.

Es können durch eine Überlagerung von Drehungen um die A-Achse 42 und die B-Achse 49 beliebige Raumwinkel eingefahren werden. Dabei werden durch Drehung um die vertikale B-Achse unterschiedliche Kippwinkel der Bohrungen relativ zu den Werkstückachsen eingestellt, während durch Drehung um die A-Achse unterschiedliche Positionen bzgl. des Umfanges eines Werkstückes einstellbar sind. Bei allen Winkeleinstellungen bleiben die Längsachsen 42 der Werkstücke horizontal.

Durch Parallelverschiebung der Werkzeuge in X-Richtung sind verschiedene Positionen entlang der Längsachse des Werkstückes einstellbar, während Parallelverschiebungen in vertikaler Y-Richtung dazu genutzt werden können, abweichend von einer Radialrichtung zur Längsachse eine seitlich zur Längsachse versetzte Bohrung einzubringen. So können durch rechtwinklige Bewegungen im Werkzeug die erforderlichen Bearbeitungspositionen angefahren werden.

Über Bewegung der Werkstückhalteeinheit 40 mittels Motor 54 parallel zur W-Achse kann das Werkstück gegen die in W-Richtung bzw. Z-Richtung festgelegte Bohrbuchse 37 gefahren werden. Durch Bewegungen in W-Richtung können auch Kompensationsbewegungen durchgeführt werden, die durch das Schwenken der Werkstücke um die vertikale B-Achse erforderlich werden, wenn die Werkzeuge horizontal gegen die vertikale B-Achse versetzt sind.

Der Bearbeitungsvorschub zur Vertiefung einer Bohrung bzw. zum Herausziehen eines Werkzeuges aus der Bohrung erfolgt zweckmäßig durch die dem Werkzeug zugeordnete Z-Achse, indem der Spindelstock relativ zur Werkzeugführungseinrichtung verfahren wird, wobei zweckmäßig die Bohrbuchse fest an der dem Werkzeug zugewandten Seite des Werkstückes anliegt.

Ein Verfahren zum Bohren von Bohrungen, die an unterschiedlichen Positionen und/oder in unterschiedlichen Ausrichtungen relativ zur Längsachse der Werkstücke eingebracht werden sollen, kann wie folgt durchgeführt werden. Die Tiefbohreinheit ist soweit eingerichtet, daß Tiefbohrwerkzeuge in die Arbeitsspindeln eingespannt und den Tiefbohrwerkzeugen und der Werkstückgeometrie angepaßte Bohrbuchsen in die Werkzeugführungseinrichtung 37 eingebaut sind. Zum Einspannen der Kurbelwellen in die Werkstückhalteeinheit kann der Drehtisch mittels Vorschub in W-Richtung auf Höhe eines seitlich neben dem Maschinengestell angeordneten Ladeportals 58 verfahren werden. Der Drehtisch kann in eine Ladeposition verdreht werden, bei der die Einspannelemente für die Werkstücke dem Ladeportal zugewandt sind, also in eine ca. 90° gegen die gezeigte Ausrichtung verdrehte Beladeposition. Nach Einspannen der Kurbelwellen werden diese durch den B-Achsen-Antrieb und die Schwenkantriebe 45 in eine erste Arbeitsposition gedreht, die der Ausrichtung der ersten zu erzeugenden Bohrungen entspricht. Durch Verschiebung des Werkzeugträgers in X-Richtung und/oder Y-Richtung wird die richtige Position der Werkzeuge angefahren. Anschließend werden durch Verfahren des Drehtisches in Richtung der W-Achse die Werkstückkonturen an die feststehenden Bohrbuchsen angedrückt. Bei eingeschaltetem Spindelantrieb wird dann über den Vorschubantrieb 24 der Spindelstock vorgeschoben und damit das von ihm getragene Werkzeug durch die Führungsbuchse hindurch in das Werkstück bis zur vorgesehenen Tiefe eingebracht. Anschließend wird das Werkzeug zurückgezogen. Anschließend kann der Drehtisch zurückgezogen werden, um durch Drehungen um die B-Achse und/oder A-Achse eine neue Werkstückausrichtung relativ zum Werkzeug zu erreichen. Zeitgleich oder zeitversetzt zu dieser Schwenkung kann durch Bewegungen der Werkzeuge in X- und/oder Y-Richtung die neue Werkzeugposition angefahren werden. Dann wird der beschriebene Vorgang für die neuen Bohrungen eingeleitet.

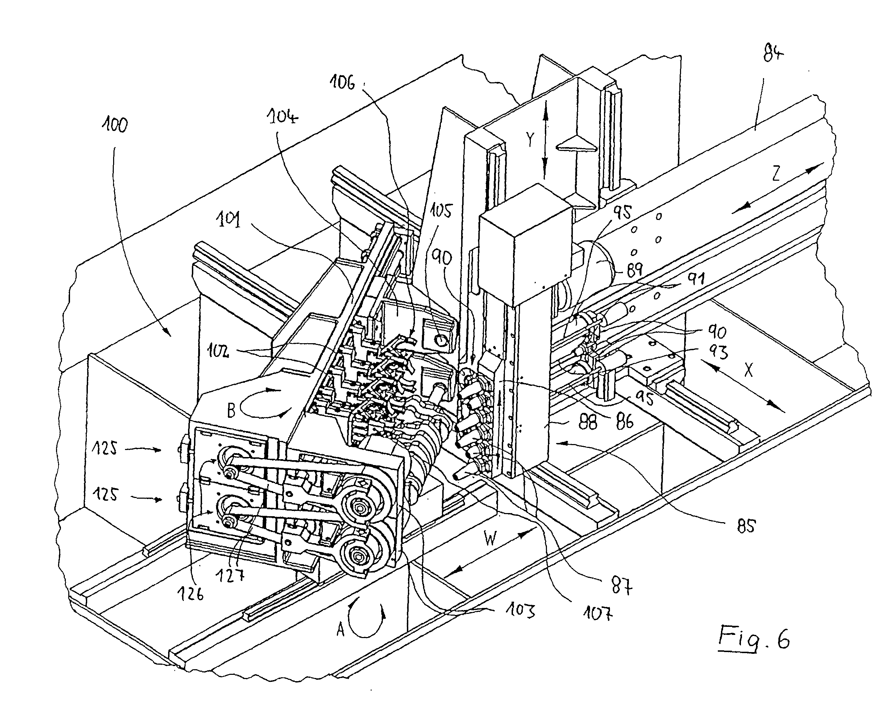

An der Teileinrichtung 43 können noch zusätzliche, im Zusammenhang mit den Figuren 6 bis 8 näher beschriebene Einrichtungen vorgesehen sein, beispielsweise Ausrichteinrichtungen für die genaue Winkelstellung der Kurbelwelle bei der Bearbeitung und/oder Bohrhilfseinrichtung, beispielsweise eine Abdichteinrichtung, die bei Durchgangsbohrungen die Durchbruchstelle des Bohrers auf der Werkstückrückseite abdichtet, damit nicht das Kühlmittel, vermischt mit den Bohrspänen, auf der gegenüberliegenden Seite beim Bohrerdurchbruch herausspritzt, die Vorrichtung verschmutzt und den Bohrer u.U. trockenlaufen läßt, was zum vorzeitigen Bohrerverschleiß führen könnte.

Um einen sicheren Anlagekontakt zwischen Bohrbuchse und Werkstück zu ermöglichen, sind zweckmäßig den jeweiligen Kurbelwellenkonturen angepaßte Bohrbuchsen vorgesehen. Sollen Bohrungen unterschiedlichen Durchmessers gebohrt werden, so sind zweckmäßig entsprechend unterschiedlich dimensionierte Tiefbohrwerkzeuge und den jeweiligen Werkzeugdurchmessern angepaßte Bohrbuchsen vorgesehen. Ein Werkzeugwechsel und ggf. ein durchzuführender Bohrbuchsenwechsel sind bei der gezeigten Ausführungsform zeitgleich automatisch durchführbar. Hierzu sind der automatische Bohrbuchsenwechsler 33 neben der Tiefbohreinheit 1 sowie eine Bohrbuchsen-Wechseleinrichtung 34 an der Werkstückhalteeinheit 40 vorgesehen. Während die Werkzeugwechseleinrichtung 33 gestellfest angebracht ist, ist die Werkzeugführungs-Wechseleinrichtung 34 fest mit dem Träger 47 der Werkstückhalteeinheit verbunden und mit diesem in W-Richtung verfahrbar. Zum gleichzeitigen Wechsel von Tiefbohrwerkzeugen und dazu passenden Bohrbuchsen wird der Drehtisch so weit zurückgezogen, daß eine Querverschiebung des Ständers 9 ohne Berührung mit der Werkstückhalteeinheit oder den darin gehaltenen Werkstücken möglich ist. Der Spindelstock wird in die in den Figuren gezeigte maximale Rückzugstellung linear verschoben. Anschließend wird der Ständer so weit seitlich verfahren, bis die Spindelachse koaxial mit der Achse eines in der Haltevorrichtung 33 gehaltenen, einzuwechselnden Werkzeuges 32 ist. In dieser Stellung sind die zu wechselnden Bohrbuchsen ebenfalls zueinander ausgerichtet und ein Bohrbuchsenwechsel kann durch entsprechende Manipulationen vorgenommen werden, wobei der Drehtisch in W-Richtung verfahren werden kann. Der Werkzeugwechsel kann ggf. gleichzeitig unter Verschiebung des Spindelstockes und entsprechende Manipulationen in der Arbeitsspindel vorgenommen werden. Nach dem Werkzeug- und Bohrbuchsenwechsel, die selbstverständlich auch jeweils gesondert durchführbar sind, kann der beschriebene Arbeitsvorgang zum Einbringen neuer Bohrungen durchgeführt werden. Eine andere Möglichkeit des Bohrbuchsenwechsels wird im Zusammenhang mit Fig. 6 beschrieben.

Die sehr übersichtlich, einfach und kompakt aufgebaute Tiefbohreinrichtung, die zum Beispiel mit der Tiefbohreinheit 4 und dem Drehtisch 50 wesentliche Komponenten moderner Tiefbohrzentren nutzen kann, erhöht eine flexible Bohrung von Werkstücken, insbesondere Kurbelwellen mit hoher Produktivität und hoher Präzision. Sämtliche Antriebe zur Bewegung der gegeneinander verschiebbaren und verdrehbaren Elemente werden zweckmäßig über eine numerische Steuerung computergestützt gesteuert. Diese Steuereinrichtung ist bei der gezeigten Anlage in einem neben der Anlage stehenden Bedienpult 59 untergebracht. Durch die NC-Steuerung sind die Vorgänge beim Bohren und zwischen den Bohrvorgängen vollständig automatisierbar. Die NC-Steuerung kann auch so eingerichtet sein, daß die Manipulationen zum Ein- und Auswechseln von Werkstücken weitgehend automatisierbar sind. Entsprechend ist es möglich, mit der beschriebenen oder einer entsprechenden maschinellen "Hardware" durch geeignete Steuerprogramme die unterschiedlichsten Bohrungsgeometrien und -verteilungen an Werkstücken, insbesondere Kurbelwellen, zu schaffen. Der kompakte Aufbau ermöglicht es, alle beweglichen Komponenten der Einrichtung innerhalb einer kompakt dimensionierten Schutzhaube 60 unterzubringen, die für Arbeiten an der Tiefbohreinrichtung zum Beispiel auf der dem Ladeportal 58 zugewandten Seite mit Türen o.dgl. verschließbare Öffnungen haben kann.

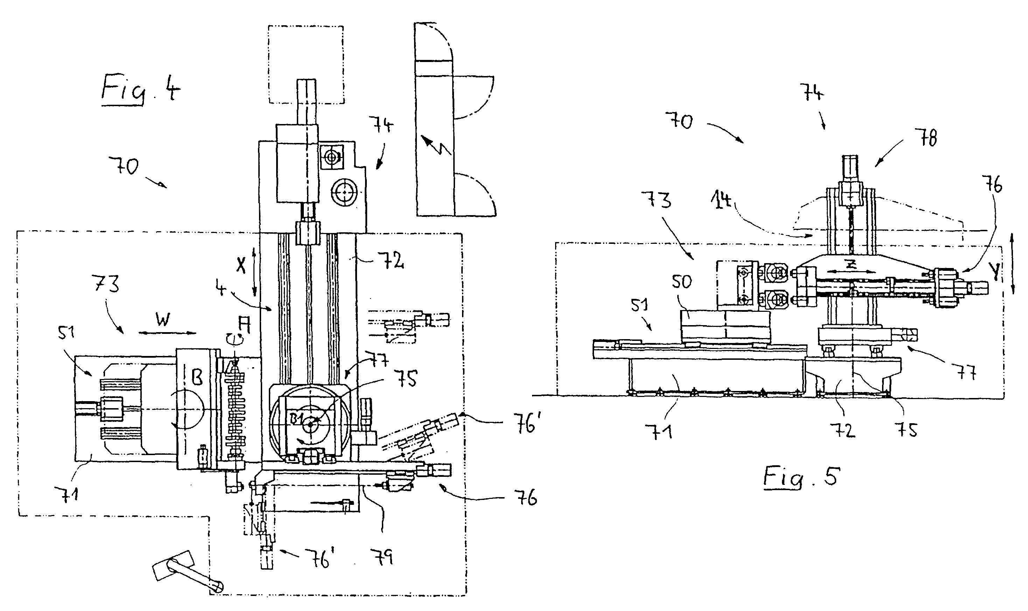

In den Figuren 4 und 5 ist eine andere Ausführungsform einer Tiefbohreinrichtung 70 gezeigt, bei der aus Gründen der Übersichtlichkeit manche entsprechenden Elemente mit den gleichen Bezugszeichen wie in den Figuren 1 bis 3 gekennzeichnet sind. Während die Ausführungsform gemäß Figuren 1 bis 3 vorzugsweise für Kurbelwellen vorgesehen ist, die nicht länger als ca. 850 mm bis 900 mm sind, ist die Ausführungsform nach den Figuren 4 und 5 besonders für längere Werkstükke, beispielsweise bis zu Längen von ca. 1.500 mm optimiert. Derartige lange Kurbelwellen werden vorwiegend in stationär einsetzbaren Dieselmotoren sowie in Schiffsdieseln oder Nutzfahrzeugen eingesetzt.

Es liegen im wesentlichen zwei Unterschiede vor. Während bei erstgenannter Ausführungsform die Tiefbohreinheit und die Werkstückhalteeinheit auf einem gemeinsamen Maschinenbett 2 in einer kompakten Anordnung montiert sind, sind bei der Ausführungsform gemäß Figuren 4 und 5 gesonderte Maschinengestelle 71 bzw. 72 für Werkstückhalteeinheit 73 bzw. Tiefbohreinheit 74 vorgesehen. Diese Maschinengestelle können nach beispielsweise L-förmiger Aufstellung z.B. durch Schrauben aneinander fixiert werden, so daß eine stabile Unterlage für die Gesamteinrichtung entsteht.

Außerdem ist, anders als bei der Ausführungsform gemäß Figuren 1 bis 3, an der Tiefbohreinheit eine zusätzliche vertikale Drehachse (B1-Achse 75) vorgesehen, die eine horizontale Verschwenkung der Werkzeugträgereinrichtung 76 ermöglicht. Hierzu ist ein auf den Linearführungsschienen der ersten Positioniereinrichtung 4 linear beweglicher Drehtisch 77 vorgesehen, dessen Unterteil auf den Führungsschienen 6 geführt ist und dessen Oberteil den Ständer 78 mit der zweiten Positioniereinrichtung 14 (vertikale Verschiebung parallel zur Y-Achse) trägt. Hierdurch ist insbesondere eine Schwenkung der Werkzeugträgereinrichtung 76 derart möglich, daß diese von einer Grundstellung, bei der die Spindelachse 79 parallel zur W-Achse 48 der Werkstückhalteeinheit verläuft, in die in Fig. 4 gestrichelt gezeichnete Position 76' verschwenkt wird, in der die Spindelachse in spitzem Winkel von beispielsweise 20° gegen die W-Achse angestellt ist. Auch eine Verschwenkung in die entgegengesetzte Richtung ist möglich.

Die dem Werkzeug zugeordnete, zweite vertikale Drehachse 75 ermöglicht es, daß auch größere Kippwinkel der Bohrungen relativ zur Radialrichtung realisiert werden können, ohne daß bei der hierfür erforderlichen Schrägstellung der Spindelachse 79 gegenüber der Werkstücklängsachse 42 das Werkstück soweit um die werkstückeigene Vertikalachse 49 verschwenkt werden muß, daß vor allem die Endbereiche der Werkstückträgereinrichtung störend in den Bewegungsbereich des Ständers 78 oder der Werkzeugträgereinrichtung 76 hineinragen. Dieses Problem wird größer, je länger die horizontal verschwenkten Werkstücke werden. Wenn zumindest ein Teil des erforderlichen Kippwinkels aus einer Verschwenkung der Spindelachse um die Vertikalachse 75 resultiert, kann dieses Störkonturproblem vermieden werden, da eine Verschwenkung um die B-Achse 49 nur den entsprechenden Restwinkel bereitstellen muß und entsprechend eine weniger starke Schwenkung ausreicht als bei ungeschwenkter Spindel.

Fig. 6 zeigt u.a. den werkstückzugewandten Endbereich einer besonders bevorzugten Ausführungsform einer Werkzeugträgereinrichtung 84, an der als Werkzeugführungseinrichtung 85 ein Bohrbuchsenwechsler in Form eines Dreifach-Linearwechslers vorgesehen ist. Dieser hat einen vertikal an einer Linearführung verschiebbaren Träger 86, an dem im Abstand der beiden Spindelachsen übereinander liegend zwei Gruppen von jeweils drei paarweise identischen Bohrbuchsen 87 angebracht sind. Dabei sind in vertikaler Anordnungsrichtung die erste und die vierte, die zweite und die fünfte und die dritte und die sechste Bohrbuchse jeweils identisch. Die Linearführung für den Träger 86 ist an der Vorderseite eines vertikal langgestreckten, kastenförmigen Späneauffangbehälters 88 befestigt, an dessen Oberseite der durch ein kastenförmiges Gehäuse gekapselte Antrieb zur Linearverschiebung des Bohrbuchsenträgers 88 vorgesehen ist. Die an ihrer Unterseite offene Auffangeinrichtung 88 wird beim Bohrvorgang horizontal von den Bohrwerkzeugen 95 durchsetzt, wobei auf der bohrbuchsenabgewandten Rückseite abgedichtete Führungen für die Werkzeuge vorgesehen sind. Dadurch wird erreicht, daß unter Druck stehendes Bohröl, das zum Ausspülen der Späne aus dem Bohrloch und zum Kühlen des Bohrwerkzeuges genutzt wird, entlang einer Axialnut der Einlippen-Bohrwerkzeuge 95 zurück in den Auffangbehälter gepreßt wird und dort nicht herausspritzt, sondern nach unten in einen geeigneten Auffangbehälter abläuft. Sollen beim Wechsel zwischen verschiedenen Bohrwerkzeugen die Bohrbuchsen 87 gewechselt werden, so reicht bei dem gezeigten Dreifach-Linearwechsler eine gemeinsame Linearverschiebung der Bohrbuchsen, um das gewünschte Paar von Bohrbuchsen in Höhe der Spindelachsen anzuordnen. Hierzu werden vorher die Werkzeuge zumindest bis in den Spänekasten 88 zurückgezogen bzw., bei Wechsel des Bohrdurchmessers, selbst ausgewechselt.

Diese Ausführungsform ermöglicht nicht nur einen bequemen Bohrbuchsenwechsel und einen weitgehend verschmutzungsfreien Betrieb, sondern auch ein Ansenken der Bohrungsendbereiche direkt an der Tiefbohrmaschine, ohne die Werkstücke umzuspannen. Hierzu ist die Senkeinrichtung 90 vorgesehen, die zwei im vertikalen Abstand der Spindelachsen übereinander liegende Senkpinolen 91 aufweist. Die parallelen Senkpinolen sind durch Vertikalverschiebung der Werkzeugträgereinrichtung 84 gemeinsam höhenverstellbar und durch einen eigenen, gemeinsamen Antrieb 89, der bei Bedarf an die Senkwerkzeuge angekoppelt werden kann, drehend antreibbar. Der Horizontalvorschub erfolgt hydraulisch mittels eines nicht gezeigten Hydraulikkolbens, an dessen Kolbenstange 93 die linear geführten Werkzeugeinheiten der Senkeinrichtung befestigt sind. Die Senkpinolen sind seitlich sowie vertikal gegen die Spindelachsen versetzt, so daß sie im zurückgezogenen Zustand den Bohrvorgang und die hierfür ggf. erforderlichen Schwenkbewegungen nicht behindern. Zum Ansenken werden die Pinolen zunächst koaxial mit den zu bearbeitenden Bohrungen angeordnet und anschließend die Senkwerkzeuge durch Pinolenvorschub an das Werkstück herangefahren. Der Bearbeitungsvorschub, bei dem die drehenden Senkwerkzeuge in das Werkstück eindringen, wird durch Bewegung der Werktsücke entlang der W-Achse erreicht.

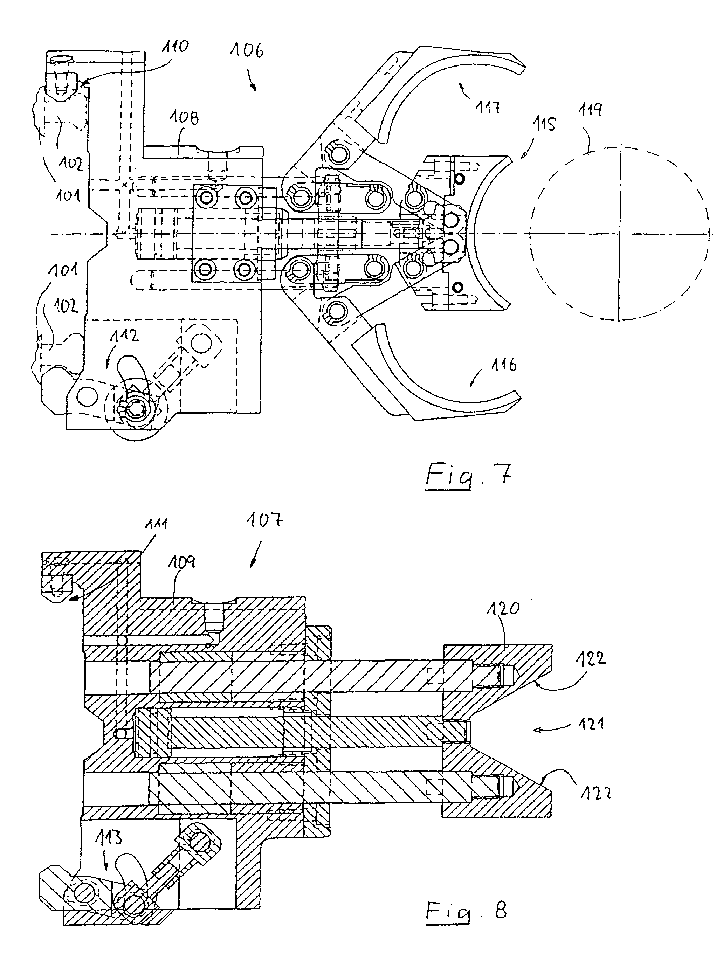

Die in Fig. 6 ebenfalls bevorzugte Ausführungsform einer Teileinrichtung 100 zum horizontalen Einspannen sowie zum Drehen der Werkstücke hat eine dem L-förmigen Träger der Einrichtung 43 entsprechende Trägerplatte 101, an deren werkzeugzugewandter Vorderseite vier übereinanderliegende horizontale, von der Werkzeugseite hintergreifbare Profilschienen 102 befestigt sind. An diesen können alle für den Aufbau der Teileinrichtung gewünschten Einheiten auswechselbar angebracht werden. Sie ermöglichen die Anbringung der Einheiten an jeder beliebigen Axialposition, so daß eine Anpassung der Teileinrichtung 100 an jede gewünschte Kurbelwellengeometrie auf einfache Weise möglich ist. An dem Betrachter zugewandten Ende sind übereinander zwei identische Lagerteile 103 befestigt, die an ihren Innenseiten nicht gezeigte Spannfutter für die Werkstücke tragen. Am gegenüberliegenden Ende sind Gegenlagerteile in Form von Reitstöcken 104 mit Lagerspitzen 105 zur Festlegung der Drehachse der Kurbelwellen vorgesehen. Zwischen den axialen Endlagern 103, 104 ist eine der Anzahl der zu bearbeitenden Lagerstellen entsprechende Anzahl von auswechselbaren Abdichteinrichtungen 106 (siehe Fig. 7) an den Profilschienen 102 eingehängt und mit diesen verrastet. Außerdem ist eine hydraulisch betätigbare Ausrichteinrichtung 107 eingehängt und verrastet, die im Detail in Fig. 8 dargestellt ist. die sichtbaren Einrichtungen 103 bis 107 dienen der Manipulation und Bearbeitung der aus Drastellungsgründen nicht gezeigten oberen Kurbelwelle. Unter den Einrichtungen 106, 107 sind identische Einrichtungen für die untere Kurbelwelle an den unteren beiden Profilschienen auswechselbar befestigt.

Für jedes einzuspannende Werkstück ist ein gesonderter, unabhängig ansteuerbarer Drehantrieb 125 für die Werkstückdrehung um die A-Achse vorgesehen. Dieser umfaßt im gezeigten Beispiel einen jeweils einen an dem Träger 101 befestigten Servomotor 126, der über einen Zahnriemen 127 am drehbar gelagerten Spannfutter angreift. Die Servomotoren sind für Werkstückdrehungen von bis zu ca. 1.700 U/min. ausgelegt, wodurch ggf. eine Reinigung der Werkstücke durch Abschleudern von Bohröl und Spänen möglich ist. Die unabhängigen Antriebe fördern zum einen den vorteilhaften modularen Aufbau der Teileinrichtung, die einfach für unterschiedliche Werkstückzahlen umgerüstet werden kann. Zum anderen wird die Einstellung der richtigen Drehstellung für jedes Werkstück individuell ermöglicht, was insbesondere bei der Einstellung mittels Meßtastern vorteilhaft ist.

Wie in den Figuren 7 und 8 gut zu erkennen, hat jede der auswechselbaren Einrichtungen 106, 107 einen in Axialrichtung schmalen Grundkörper 108 bzw. 109 mit einem am Oberende vorgesehenen, nach unten abragenden Haltefinger 110 bzw. 111, der in eine obere Aufnahmenut der jeweils oberen Profilschiene eingehängt wird. Am gegenüberliegenden Unterende ist ein verschwenkbarer Rasthebel 112 bzw. 113 vorgesehen, der nach Einhängen der Haltefinger in die obere Schiene und Anlegen des Grundkörpers an die Vorderseite der Halteprofile in eine Aufnahmenut an die Unterseite der jeweils unteren Führungsschiene einrastet und so die Einrichtung wackelfrei und verliersicher an den Profilen 102 festlegt. Diese Art der Befestigung ermöglicht eine Anbringung dieser Einrichtungen an beliebigen, ggf. stufenlos einstellbaren Axialpositionen entlang der Führungsprofile. Die Anpassung der Einrichtung an unterschiedlich dimensionierte Kurbelwellen ist dadurch sehr einfach möglich.

Die Abdichteinrichtung 106 (Fig. 7) hat drei an einem gemeinsamen Kniehebelmechanismus angebrachte, jeweils einen Umfangswinkel von ca. 110° Grad umfassende Abdichtschalen 115, 116, 117, die an den zylindrisch gekrümmten, werkstückzugewandten Flächen Kunststoffbeläge aufweisen. Der Kniehebelmechanismus ist so ausgelegt, daß bei einem hydraulischen Vorschub der mittleren Schale 115 in Richtung des abzudichtenden Werkstückabschnitts (Lager 119) sich die symmetrisch zur Mittelschale angeordneten äußeren Schalen 116, 117 zur Bildung eines fast lückenlosen Dichtringes um den abzudichtenden Werkstückabschnitt legen, so daß nur noch auf der der Schale 115 gegenüberliegenden Seite ein Spalt zur Durchführung des Bohrwerkzeuges bleibt. Durch diese Rundum-Abdichtung wird ein Austritt von unter Druck stehender Bohrflüssigkeit bei Durchbruch des Bohrwerkzeuges zuverlässig verhindert. Dieses dringt lediglich ein Stück in dem weichen Belag der Schale 115 ein. Ein Austreten von Bohrflüssigkeit und damit eine Verschmutzung des Bohrbereiches sowie ggf. ein Trockenlaufen der Bohrwerkzeuge wird auf diese Weise zuverlässig verhindert.

Die hydraulische betätigbare Ausrichteinrichtung 107 in Fig. 8 wird beim Einspannen der Werkstücke eingesetzt, um die richtige Drehlage bzw. Radialposition des Werkstückes zu gewährleisten. Sie hat ein hydraulisch horizontal vor- und zurückbewegbares Abstützorgan 120 mit einer werkstückzugewandten, trapezförmigen Ausnehmung 121, die von prismatischen Abstützflächen 122 begrenzt ist. Beim Einspannen einer Kurbelwelle wird diese zunächst zwischen einer Spitze 105 am Lagerbock 104 und dem gegenüberliegenden Spannfutter axial eingespannt, ohne daß das Spannfutter das Werkstück schon radial einspannt und festhält. Anschließend erfolgt die radiale Festlegung des Werkstückes bzw. die Einstellung der richtigen Drehposition um die Werkstücklängsachse dadurch, daß das Abstützorgan an ein geeignetes Hublager der Kurbelwelle angedrückt wird. Die richtige Drehstellung ist erreicht, wenn der Mantel des Hublagers an den beiden gegenüberliegenden Abstützflächen 122 anliegt. Anschließend wird durch Betätigung des Spannfutters das Werkstück radial eingespannt und kann nun bearbeitet werden. Die Festlegung mittels derartiger Ausrichtelemente ist vor allem bei größeren Serien vorteilhaft, wobei für jede Kurbelwelle und Wellengeometrie geeignet dimensionierte und ausgelegte Ausrichtelemente vorzusehen sind. Bei kleineren Serien kann zur Steigerung der Flexibilität der Einrichtung auch mit Meßtastern gearbeitet werden, die beispielsweise an der Tiefbohreinheit angebracht sein können.

Die in den Figuren 6 bis 8 gezeigten Einrichtungen können bei allen erfindungsgemäßen Tiefbohreinrichtungen z.b. gemäß figuren 1 bis 3 und Figuren 4 und 5 in Teilen oder in Gesamtheit vorgesehen sein.

Insbesondere die Abdichteinrichtung, eine integrierte Bohrungsendbearbeitungseinrichtung, eine Bohrungsverschlußeinrichtung und die Integration einer Reinigungseinrichtung in die Tiefbohreinrichtung sind Maßnahmen, die unabhängig von einer ausschließlich horizontalen Ausrichtung der zu bearbeitenden Werkstücke auch bei anderen Tiefbohreinrichtungen der beschriebenen Art vorteilhaft sein können. Sie ermöglichen eine Komplettbearbeitung, z.B. von Ölkanälen in einer einzigen Arbeitsstation und damit im Vergleich zum Stand der Technik erhebliche Platzsparvorteile und Produktivitätssteigerungen.

## Patentansprüche

1. Tiefbohreinrichtung zum Bohren von Bohrungen in Werkstücken, insbesondere Kurbelwellen, wobei die Bohrungen an unterschiedlichen Positionen und/oder in unterschiedlichen Ausrichtungen relativ zu einer Werkstücklängsachse einbringbar sind, mit
einer Tiefbohreinheit (3; 74) mit mindestens einem Spindelstock (22), der mindestens eine durch einen Spindelantrieb (27) um eine horizontale Spindelachse (30; 79) drehbaren Arbeitsspindel (26) zur Aufnahme eines parallel zur Spindelachse verschiebbaren Tiefbohrwerkzeuges (32) aufweist;
einer Werkstückhalteeinheit (40) mit einer ersten Teileinrichtung (43; 100) zum Halten mindestens eines Werkstückes (41) und zur Drehung des Werkstückes um seine Werkstücklängsachse (42); und einer zweiten Teileinrichtung (50) zur Drehung des Werkstücks (41) um eine senkrecht zur Werkstücklängsachse ausgerichtete Drehachse (49);
einer ersten Positioniereinrichtung (4) zur Relatiwerschiebung von Werkstück und Tiefbohrwerkzeug parallel zu einer horizontalen ersten Achse (8) (X-Achse) quer zur Spindelachse (30);
einer zweiten Positioniereinrichtung (14) zur Relatiwerschiebung von Werkstück und Tiefbohrwerkzeug parallel zu einer vertikalen zweiten Achse (15) (Y-Achse) senkrecht zur Spindelachse (30); und
einer dritten Positioniereinrichtung (51) zur Relativverschiebung von Werkstück und Tiefbohrwerkzeug parallel zu einer dritten Achse (48) (W-Achse) parallel oder in spitzem Winkel zur Spindelachse (30),
**dadurch gekennzeichnet, dass** sie eine integrierte Bohrungsendbearbeitungseinrichtung (90) zur vorzugsweise materialabtragenden Bearbeitung der Eintrittsbereiche und/oder Austrittsbereiche von Bohrungen an der Werkstückmantelfläche aufweist.

2. Tiefbohreinrichtung nach Anspruch 1, **dadurch gekennzeichnet, dass** die Bohrungsendbearbeitungseinrichtung (90) zum Ansenken der Eintrittsbereiche und/oder Austrittsbereiche ausgebildet ist, wobei sie vorzugsweise mindestens eine Senkpinole (91) mit mindestens einem parallel zur Spindelachse verfahrbaren Senkwerkzeug aufweist, wobei die Senkpinole vorzugsweise fest mit einer Werkzeugführungseinrichtung (85) verbunden und/oder mit dieser quer zur Spindelachse beweglich ist.

3. Tiefbohreinrichtung nach Anspruch 1 oder 2, **dadurch gekennzeichnet, dass** eine integrierte Einrichtung zur Vorbereitung für einen Bohrungsverschluss vorgesehen ist.

4. Tiefbohreinrichtung nach Anspruch 3, **dadurch gekennzeichnet, dass** die integrierte Einrichtung zur Vorbereitung für einen Bohrungsverschluss derart ausgebildet ist, dass zunächst eine Durchmessererweiterung eines Bohrungsendabschnittes erzeugt wird, dass danach ein vorzugsweise kugelförmiger Verschlusskörper in die Durchmessererweiterung eingesetzt wird und dass danach der Verschlusskörper in der Durchmessererweiterung festgesetzt wird, insbesondere durch Verstemmen.

5. Tiefbohreinrichtung nach einem der vorhergehenden Ansprüche, **dadurch gekennzeichnet, dass** sie eine integrierte Reinigungseinrichtung zur Befreiung der Werkstücke von Bearbeitungsrückständen aufweist.

6. Tiefbohreinrichtung nach Anspruch 5, **dadurch gekennzeichnet, dass** die Reinigungseinrichtung als Schleudereinrichtung ausgebildet ist, wobei vorzugsweise ein Drehantrieb (45; 125) für eine Drehung des Werkstückes um seine Werkstücklängsachse (42) derart ausgebildet ist, dass eine Werkstückdrehung mit Drehgeschwindigkeiten von mehr als ca. 500 U/min., insbesondere zwischen ca. 800 und ca. 1.700 U/min., durchführbar ist.

7. Tiefbohreinrichtung nach einem der vorhergehenden Ansprüche, **dadurch gekennzeichnet, dass** mindestens eine Abdichteinrichtung (106) zur Abdichtung von Durchtrittsstellen von Tiefbohrwerkzeugen auf der dem Tiefbohrwerkzeug abgewandten Seite eines Werkstückes vorgesehen ist.

8. Tiefbohreinrichtung nach Anspruch 7, **dadurch gekennzeichnet, dass** die Abdichteinrichtung (106) mindestens eine in einem Abdichtabschnitt an eine Werkstückmantelfläche über einen Umfangsabschnitt anpreßbare Abdichtschale (115, 116, 117) aufweist, wobei die Abdichteinrichtung (106) vorzugsweise für einen Abdichtabschnitt mehrere Abdichtschalen zur im wesentlichen lückenlosen Abdichtung des Abdichtabschnitts entlang des Werkstückumfanges aufweist.

9. Tiefbohreinrichtung nach einem der Ansprüche 7 oder 8, **dadurch gekennzeichnet, dass** Abdichteinrichtungen (106) auswechselbar an der Werkstückträgereinrichtung (100) anbringbar oder angebracht sind und/oder dass die Position einer Abdichteinrichtung (106) in Axialrichtung des Werkstücks stufenlos einstellbar ist.

10. Tiefbohreinrichtung nach einem der vorhergehenden Ansprüche, **dadurch gekennzeichnet, dass** die erste Teileinrichtung (43; 100) zum Halten mindestens eines Werkstückes (41) mit horizontal ausgerichteter Werkstücklängsachse (42) und zur Drehung des Werkstückes um die horizontal ausgerichtete Werkstücklängsachse (42) ausgebildet ist.

11. Tiefbohreinrichtung nach einem der vorhergehenden Ansprüche, **dadurch gekennzeichnet, dass** die zweite Teileinrichtung (50) zur Drehung des Werkstücks (41) um eine vertikal ausgerichtete Drehachse (49) ausgebildet ist, wobei die zweite Teileinrichtung (50) vorzugsweise derart um die Drehachse (49) drehbar ist, dass das Werkstück in eine oder aus einer Ladeposition drehbar ist, die eine seitliche Be- und Entladung in horizontaler Richtung ermöglicht.

12. Tiefbohreinrichtung nach einem der vorhergehenden Ansprüche, **dadurch gekennzeichnet, dass** die zweite Teileinrichtung der Werkstückhalteeinheit (40) einen Drehtisch (50) mit vertikaler Drehachse (49) aufweist, der vorzugsweise parallel oder in spitzem Winkel zur Spindelachse (30) verfahrbar ist.

13. Tiefbohreinrichtung nach einem der vorhergehenden Ansprüche, **dadurch gekennzeichnet, dass** die Tiefbohreinheit mindestens eine Werkzeugträgereinrichtung (11; 84) mit mindestens einem Spindelstock aufweist und dass die Werkzeugträgereinrichtung, eine dem Spindelstock zugeordnete Werkzeugführungseinrichtung (35; 85) zur Führung des Werkzeuges sowie eine Werkzeugverschiebungseinrichtung zur Bewegung des Tiefbohrwerkzeuges relativ zur Werkzeugführungseinrichtung parallel zur Spindelachse (30; 76) aufweist.

14. Tiefbohreinrichtung nach einem der vorhergehenden Ansprüche, **dadurch gekennzeichnet, dass** die dritte Positioniereinrichtung (51) der Werkstückhalteeinheit (40) zugeordnet ist, wobei die dritte Positioniereinrichtung vorzugsweise eine parallel oder in spitzem Winkel zur Spindelachse ausgerichtete dritte Linearführungseinrichtung (52) zur Führung der Werkstückhalteeinheit (40) relativ zu einem Gestell (2) der Tiefbohreinrichtung aufweist.

15. Tiefbohreinrichtung nach einem der vorhergehenden Ansprüche, **dadurch gekennzeichnet, dass** die erste Positioniereinrichtung (4) und die zweite Positioniereinrichtung (14) der Tiefbohreinheit (3) zugeordnet sind, wobei vorzugsweise die erste Positioniereinrichtung eine quer zur Spindelachse (30) horizontal verlaufende erste Linearführungseinrichtung (6) und die zweite Positioniereinrichtung (14) eine senkrecht zur Spindelachse vertikal verlaufende zweite Linearführungseinrichtung (10) zur Führung der Werkzeugträgereinrichtung (11) relativ zu einem Gestell (2) der Tiefbohreinrichtung aufweist, wobei insbesondere die erste Positioniereinrichtung an dem Gestell (2) befestigt und die zweite Positioniereinrichtung an der ersten Positioniereinrichtung beweglich geführt ist.

16. Tiefbohreinrichtung nach einem der vorhergehenden Ansprüche, **dadurch gekennzeichnet, dass** die Tiefbohreinheit (3) keine Positioniereinrichtung zur Verschiebung der Werkzeugträgereinrichtung (11; 84) parallel oder in spitzem Winkel zur Spindelachse (30; 79) aufweist.

17. Tiefbohreinrichtung nach einem der vorhergehenden Ansprüche, **dadurch gekennzeichnet, dass** die Tiefbohreinheit (74) eine Einrichtung zur Drehung der Spindelachse (79), insbesondere einer Werkzeugträgereinrichtung (76), um eine vertikale Drehachse (75) aufweist.

18. Tiefbohreinrichtung nach einem der vorhergehenden Ansprüche, **dadurch gekennzeichnet, dass** sie ein Gestell (72) zum Tragen der Tiefbohreinheit (74) und ein davon gesondertes weiteres Gestell (71) zum Tragen der Werkstückhalteeinheit (40 aufweist.

19. Tiefbohreinrichtung nach Anspruch 17 oder 18, **dadurch gekennzeichnet, dass** die Spindelachse (30, 79) und das Werkstück ausgehend von einer Grundstellung, in der die Werkstücklängsachse (42) senkrecht zur Spindelachse (30; 79) ausgerichtet ist, in zwei gegensinnige Richtungen horizontal gegeneinander verschwenkbar sind.

20. Tiefbohreinrichtung nach einem der vorhergehenden Ansprüche, **dadurch gekennzeichnet, dass** eine Werkzeugführungs-Wechseleinrichtung (34; 85) zum automatischen Auswechseln von Werkzeugführungen (37; 87) der Werkzeugführungseinrichtung vorgesehen ist.

21. Tiefbohreinrichtung nach Anspruch 20, **dadurch gekennzeichnet, dass** die Werkzeugführungs-Wechseleinrichtung der Werkstückhalteeinheit (40) zugeordnet, insbesondere fest an dieser angeordnet und mit dieser verfahrbar ist, wobei sie insbesondere ein Pickup-, Scheiben- oder Kettenmagazin für Werkzeugführungen aufweist.

22. Tiefbohreinrichtung nach Anspruch 13 oder 20, **dadurch gekennzeichnet, dass** die Werkzeugführungseinrichtung (85) mindestens einen beweglich, insbesondere linear beweglich gelagerten Werkzeugführungsträger (86) mit mehreren einer Spindelachse zugeordneten, durch Bewegung des Werkzeugführungsträgers auswechselbaren Werkzeugführungen (87) aufweist, insbesondere einen Mehrfach-Linearwechsler.

23. Tiefbohreinrichtung nach einem der vorhergehenden Ansprüche, **dadurch gekennzeichnet, dass** sie mindestens eine Werkzeugführungseinrichtung (85) hat, der eine Auffangeinrichtung (88) zum spritzgeschützten Auffangen von flüssigen Bohrhilfsmitteln und/oder Spänen zugeordnet ist, wobei die Werkzeugführungseinrichtung (85) vorzugsweise mindestens einen geschlossenen Bohrbuchsenträger aufweist.

24. Tiefbohreinrichtung nach einem der vorhergehenden Ansprüche, **dadurch gekennzeichnet, dass** eine Werkzeugwechseleinrichtung (33) zum automatischen Auswechseln von Tiefbohrwerkzeugen (32) an der Arbeitsspindel (26) vorgesehen ist, wobei die Werkzeugwechseleinrichtung vorzugsweise der Tiefbohreinheit (3) zugeordnet ist, insbesondere fest am Gestell (2) angebracht und durch Verfahren der Werkzeugträgereinrichtung (11) zugänglich ist.

25. Tiefbohreinrichtung nach Anspruch 24, **dadurch gekennzeichnet, dass** die Werkzeugführungs-Wechseleinrichtung (34) und die Werkzeugwechseleinrichtung (33) derart ausgebildet und angeordnet sind, dass eine Auswechslung von Tiefbohrwerkzeugen (32) und zugeordneten Werkzeugführungen (37) zeitgleich durchführbar ist.

26. Tiefbohreinrichtung nach einem der vorhergehenden Ansprüche, **dadurch gekennzeichnet, dass** die Werkstückhalteeinheit (40) zur gleichzeitigen Aufnahme von mehreren, insbesondere zwei, gleichzeitig bearbeitbaren Werkstücken (41) ausgebildet ist, wobei die Werkstücke vorzugsweise mit parallelen Werkstücklängsachsen (42) übereinander anordenbar sind.

27. Tiefbohreinrichtung nach Anspruch 26, **dadurch gekennzeichnet, dass** für jedes Werkstück (41) ein gesondert steuerbarer Drehantrieb (45; 125) vorgesehen ist.

28. Tiefbohreinrichtung nach einem der vorhergehenden Ansprüche, **dadurch gekennzeichnet, dass** mehrere, insbesondere zwei, achsparallel übereinander angeordnete Arbeitsspindeln (26) vorgesehen sind und/oder dass die Werkzeugführungseinrichtung mehrere, insbesondere zwei oder vielfache von zwei, achsparallel übereinander angeordnete Werkzeugführungen (37; 87) hat.

## Claims

1. Deep drilling device for drilling holes in workpieces, particularly crankshafts, in which the holes can be drilled at different positions and/or in different orientations relative to a work longitudinal axis, having a deep drilling unit (3; 74) with at least one headstock (22), which has at least one main spindle (26) rotatable by a spindle drive (27) about a horizontal spindle axis (30; 79) for the reception of a deep drilling tool (32) displaceable parallel to the spindle axis, a work holding unit (40) with a first partial device (43; 100) for holding at least one workpiece (41) and for rotating the workpiece about its work longitudinal axis (42) and a second partial device (50) for rotating the workpiece (41) about a rotation axis (49) perpendicular to the work longitudinal axis, a first positioning device (4) for the relative displacement of workpiece and deep drilling tool parallel to a horizontal, first axis (8) (X axis) at right angles to the spindle axis (30), a second positioning device (14) for the relative displacement of workpiece and deep drilling tool parallel to a vertical, second axis (15) (Y axis) perpendicular to the spindle axis (30) and a third positioning device (51) for the relative displacement of workpiece and deep drilling tool parallel to a third axis (48) (W axis) parallel or at an acute angle to the spindle axis (30), **characterized in that** it has an integrated hole machining device (90) for preferably material removing machining of the entrance regions and/or exit regions of holes in the work circumferential surface.

2. Deep drilling device according to claim 1, **characterized in that** the hole finish machining device (90) is constructed for spotfacing the entrance and/or exit regions and it preferably has at least one countersinking sleeve (91) with at least one countersinking tool displaceable parallel to the spindle axis, the countersinking sleeve being preferably firmly connected to the tool guidance device (85) and/or is movable therewith transversely to the spindle axis.

3. Deep drilling device according to claim 1 or 2, **characterized in that** there is an integrated device for preparing for a hole closure.

4. Deep drilling device according to claim 3, **characterized in that** the integration device for the preparation for a hole closure is **characterized in that** initially a diameter widening of a hole end portion is produced, subsequently a preferably spherical closure body is inserted in the diameter widening and subsequently the closure body is fixed in the diameter widening, particularly by caulking.

5. Deep drilling device according to one of the preceding claims, **characterized in that** it has an integrated cleaning device for removing machining residues from workpieces.

6. Deep drilling device according to claim 5, **characterized in that** the cleaning device is constructed as a centrifugal device and preferably a rotary drive (45; 125) for rotating the workpiece about its work longitudinal axis (42) is constructed in such a way that a work rotation at speeds of more than approximately 500 rpm, particularly between approximately 800 and approximately 1700 rpm can be achieved.

7. Deep drilling device according to one of the preceding claims, **characterized in that** there is at least one sealing device (106) for sealing passage points of deep drilling tools on the workpiece side remote from the deep drilling tool.

8. Deep drilling device according to claim 7, **characterized in that** the sealing device (106) has at least one sealing shell (115, 116, 117) pressable over a circumferential portion in a sealing portion on a work circumferential surface, the sealing device (106), preferably for one sealing portion, has several sealing shells for the substantially uninterrupted sealing of the sealing portion along the work circumference.

9. Deep drilling device according to one of the claims 7 or 8, **characterized in that** the sealing devices (106) can be fitted or are fitted interchangeably to the work support device (100) and/or that the position of a sealing device (106) is continuously adjustable in the workpiece axial direction.

10. Deep drilling device according to one of the preceding claims, **characterized in that** the first partial device (43; 100) is constructed for holding at least one workpiece (41) with horizontally oriented work longitudinal axis (42) and for rotating the workpiece about the horizontally oriented work longitudinal axis (42).

11. Deep drilling device according to one of the preceding claims, **characterized in that** the second partial device (50) is constructed for rotating the workpiece (41) about a vertically oriented rotation axis (49), the second partial device (50) preferably being rotatable about the rotation axis (49) in such a way that the workpiece can be rotated into or out of a loading position, which permits a horizontal, lateral loading and unloading.

12. Deep drilling device according to one of the preceding claims, **characterized in that** the second partial device of the work holding unit (40) has a rotary table (50) with a vertical rotation axis (49), which is preferably movable parallel or at an acute angle to the spindle axis (30).

13. Deep drilling device according to one of the preceding claims, **characterized in that** the deep drilling unit has at least one tool carrier device (11; 84) with at least one headstock and that the tool carrier device has a tool guidance device (35; 85) associated with the headstock for guiding the tool, as well as a tool displacement device for displacing the deep drilling tool relative to the tool guidance device parallel to the spindle axis (30; 76).

14. Deep drilling device according to one of the preceding claims, **characterized in that** the third positioning device (51) is associated with the work holding unit (40), the third positioning device preferably having a third linear guidance device (52) oriented parallel to or at an acute angle to the spindle axis for guiding the work holding unit (40) relative to a frame (2) of the deep drilling device.

15. Deep drilling device according to one of the preceding claims, **characterized in that** the first positioning device (4) and the second positioning device (14) are associated with the deep drilling unit (3), in which preferably the first positioning device has a horizontally directed, first linear guidance device (6) at right angles to the spindle axis (30) and the second positioning device (14) has a vertically directed, second linear guidance device (10) perpendicular to the spindle axis for guiding the work carrier device (11) relative to a frame (2) of the deep drilling device and in particular the first positioning device is fixed to the frame (2) and the second positioning device is movably guided on the first positioning device.

16. Deep drilling device according to one of the preceding claims, **characterized in that** the deep drilling unit (3) has no positioning device for the displacement of the tool carrier device (11; 84) parallel to or at an acute angle to the spindle axis (30. 79).

17. Deep drilling device according to one of the preceding claims, **characterized in that** the deep drilling unit (74) has a device for rotating the spindle axis (79), particularly a tool carrier device (76), about a vertical rotation axis (75).

18. Deep drilling device according to one of the preceding claims, **characterized in that** it has a frame (72) for carrying the deep drilling unit (74) and a further, separate frame (71) for carrying the work holding unit (40).

19. Deep drilling device according to claim 17 or 18, **characterized in that** the spindle axis (30; 79) and the workpiece, starting from a base position in which the work longitudinal axis (42) is oriented perpendicular to the spindle axis (30; 79) are horizontally swivellable against one another in two opposite directions.

20. Deep drilling device according to one of the preceding claims, **characterized in that** a tool guide changer (34; 85) for the automatic replacement of the tool guides (37; 87) of the tool guidance device is provided.

21. Deep drilling device according to claim 20, **characterized in that** the tool guide changer is associated with the work holding unit (40) and is in particular fixed thereon and movable therewith and in particular has a pickup, disk or chain magazine for tool guides.

22. Deep drilling device according to claim 13 or 20, **characterized in that** the tool guidance device (85) has at least one movably, particularly lingarly movably mounted tool guidance carrier (86) with several tool guides (87) associated with a spindle axis and replaceable by moving the tool guidance carrier, particularly in the form of a multiple linear changer.

23. Deep drilling device according to any one of the preceding claims, **characterized in that** it has at least one tool guidance device (85), which is provided with a collecting device (88) for the splash-protected collection of liquid drilling aids and/or chips, the tool guidance device (85) preferably having at least one closed drill bush carrier.

24. Deep drilling device according to one of the preceding claims, **characterized in that** a tool changer (33) for the automatic changing of deep drilling tools (32) is provided on the main spindle (26), the tool changer preferably being associated with the deep drilling unit (3) and is in particular fixed to the frame (2) and rendered accessible by a movement of the tool carrier device (11).

25. Deep drilling device according to claim 24, **characterized in that** the tool guide changer (34) and tool changer (33) are constructed and arranged in such a way that the deep drilling tools (32) and associated tool guides (37) can be simultaneously changed.

26. Deep drilling device according to one of the preceding claims, **characterized in that** the work holding unit (40) is constructed for the simultaneous reception of several and in particular two simultaneously machinable workpieces (41), which are preferably superimposable with parallel work longitudinal axes.

27. Deep drilling device according to claim 26, **characterized in that** a separate, controllable rotary drive (45; 125) is provided for each workpiece (41).

28. Deep drilling device according to one of the preceding claims, **characterized in that** several, particularly two, axially parallel, superimposed main spindles (26) are provided and/or that the work guidance device has several, particularly two or multiples of two, axially parallel, superimposed tool guides (37; 87).

## Revendications

1. Dispositif de forage profond pour le forage de forures dans des pièces d'oeuvres, notamment dans des vilebrequins, les forures pouvant être opérées dans différents endroits et/ou avec différentes orientations par rapport à un axe longitudinal de pièce d'oeuvre, avec une unité de forage profond (3 ; 74) avec au moins une poupée porte-broche (22), qui présente au moins un arbre moteur (26) rotatif par un moyen d'entraînement de broche (27) autour d'un axe de broche (30 ; 79) horizontal pour le logement d'un outil de forage profond (32) qui peut être déplacé parallèlement à l'axe de broche;
avec une unité de soutien de pièce d'oeuvre (40) avec un premier dispositif partiel (43 ; 100) pour tenir au moins une pièce d'oeuvre (41) et pour tourner la pièce d'oeuvre autour de son axe longitudinal de pièce d'oeuvre (42) ; et avec un deuxième dispositif partiel (50) pour tourner la pièce d'oeuvre (41) autour d'un axe de rotation (49) orienté orthogonalement par rapport à l'axe longitudinal de pièce d'oeuvre ;
avec un premier dispositif de positionnement (4) pour le déplacement relatif de la pièce d'oeuvre et de l'outil de forage profond parallèlement à un premier axe (8) horizontal (axe des x), transversalement par rapport à l'axe de broche (30) ;
avec un deuxième dispositif de positionnement (14) pour le déplacement relatif de la pièce d'oeuvre et de l'outil de forage profond parallèlement par rapport à un deuxième axe (15) vertical (axe des y) orthogonalement par rapport à l'axe de broche (30) ; et avec un troisième dispositif de positionnement (51) pour le déplacement relatif de la pièce d'oeuvre et de l'outil de forage profond parallèlement par rapport à un troisième axe (48) (axe des w), parallèlement ou bien sous un angle aigu par rapport à l'axe de broche (30), **caractérisé en ce qu'**il présente un dispositif d'usinage terminal de forure (90) intégré pour l'usinage de préférence avec enlèvement de matière des domaines d'entrée et/ou de sortie de forures à la surface d'enveloppe de pièce d'oeuvre.

2. Dispositif de forage profond d'après la revendication 1, **caractérisé en ce que** le dispositif d'usinage terminal de forure (90) est conçu pour le chanfreinage des domaines d'entrée et/ou de sortie, ce dispositif présentant de préférence au moins une douille de broche à chanfreiner (91) avec au moins un outil à chanfreiner mobile parallèlement par rapport à l'axe de broche, la douille de broche à chanfreiner étant de préférence raccordée de manière fixe avec un moyen de guidage d'outil (85) et/ou mobile avec celui-ci transversalement par rapport à l'axe de broche.

3. Dispositif de forage profond d'après la revendication 1 ou 2, **caractérisé en ce que** l'on prévoit un dispositif intégré pour la préparation de la fermeture de forure.

4. Dispositif de forage profond d'après la revendication 3, **caractérisé en ce que** le dispositif intégré pour la préparation de la fermeture de forure est réalisé de telle manière qu'on produit d'abord un élargissement de diamètre d'un secteur terminal de forure, qu'on place ensuite un corps de fermeture de préférence sphérique dans l'élargissement de diamètre et qu'ensuite on fixe le corps de fermeture dans l'élargissement de diamètre, notamment parmatage.

5. Dispositif de forage profond d'après une des revendications précédentes, **caractérisé en ce qu'**il présente un moyen de nettoyage intégré pour libérer les pièces d'oeuvre des résidus d'usinage.

6. Dispositif de forage profond d'après la revendication 5, **caractérisé en ce que** le moyen de nettoyage est réalisé en tant que dispositif centrifuge, un dispositif moteur de rotation (45 ; 125) étant de préférence réalisé pour une rotation de la pièce d'oeuvre autour de son axe longitudinal de pièce d'oeuvre (42) de telle manière qu'une rotation de la pièce d'oeuvre est opérable à des vitesses de rotation approximatives de plus de 500 tr/min, notamment entre à peu près 800 et 1700 tr/min.

7. Dispositif de forage profond d'après une des revendications précédentes, **caractérisé en ce qu'**au moins un moyen d'étanchéité (106) pour l'étanchement de lieux de passage des outils de forage profond du côté de la pièce d'oeuvre opposé à l'outil de forage profond.

8. Dispositif de forage profond d'après la revendication 7, **caractérisé en ce que** le moyen d'étanchéité (106) présente au moins une surface convexe (115 ; 116 ; 117) pouvant être pressée dans un secteur d'étanchéité contre une surface d'enveloppe de pièce d'oeuvre le long d'une section de périmètre, le moyen d'étanchéité (106) présentant de préférence pour un secteur d'étanchéité plusieurs surfaces convexes d'étanchéité pour l'étanchement essentiellement complet du secteur d'étanchéité le long du périmètre de pièce d'oeuvre.

9. Dispositif de forage profond d'après une des revendications 7 ou 8, **caractérisé en ce que** des moyens d'étanchéité (106) sont applicables ou appliqués de manière interchangeable sur le moyen de support de pièce d'oeuvre (100) et/ou **en ce que** la position d'un moyen d'étanchéité (106) est ajustable de manière continue en direction axiale de la pièce d'oeuvre.

10. Dispositif de forage profond d'après une des revendications précédentes, **caractérisé en ce que** le premier dispositif partiel (43 ; 100) est réalisé pour tenir au moins une pièce d'oeuvre (41), l'axe longitudinal de pièce d'oeuvre (42) étant orienté en direction horizontale, et pour tourner la pièce d'oeuvre autour d'un axe longitudinal de pièce d'oeuvre (42) orienté en direction horizontale.

11. Dispositif de forage profond d'après une des revendications précédentes, **caractérisé en ce que** le deuxième dispositif partiel (50) est réalisé pour tourner la pièce d'oeuvre (41) autour d'un axe de rotation (49) orienté en direction verticale, le deuxième dispositif partiel (50) pouvant de préférence être tourné autour de l'axe de rotation (49) de telle manière que la pièce d'oeuvre peut être toumée dans une ou à partir d'une position de chargement, qui permet un chargement et un déchargement en direction horizontale.

12. Dispositif de forage profond d'après une des revendications précédentes, **caractérisé en ce que** le deuxième dispositif partiel de l'unité de soutien de pièce d'oeuvre (40) présente une table tournante (50) avec un axe de rotation (49) vertical, pouvant être déplacée de préférence en direction parallèle ou sous un angle aigu par rapport à l'axe de broche (30).

13. Dispositif de forage profond d'après une des revendications précédentes, **caractérisé en ce que** l'unité de forage profond présente au moins un dispositif de support d'outil (11 ; 84) avec au moins une poupée porte-broche et **en ce que** le dispositif de support d'outil présente un dispositif de guidage d'outil (35 ; 85) associé à la poupée porte-broche pour le guidage de l'outil ainsi qu'un dispositif de déplacement d'outil pour le déplacement de l'outil de forage profond par rapport au dispositif de guidage d'outil parallèlement à l'axe de broche (30 ; 76).

14. Dispositif de forage profond d'après une des revendications précédentes, **caractérisé en ce que** le troisième dispositif de positionnement (51) est associé à l'unité de soutien de pièce d'oeuvre (40), le troisième dispositif de positionnement présentant de préférence un troisième dispositif de guidage linéaire (52) orienté parallèlement ou sous un angle aigu par rapport à l'axe de broche, pour le guidage de l'unité de soutien de pièce d'oeuvre (40) par rapport à un bâti (2) du dispositif de forage profond.

15. Dispositif de forage profond d'après une des revendications précédentes, **caractérisé en ce que** le premier dispositif de positionnement (4) et le deuxième dispositif de positionnement (14) sont associés à l'unité de forage profond (3), le premier dispositif de positionnement présentant de préférence un premier dispositif de guidage linéaire (6) s'étendant en direction horizontale transversalement par rapport à l'axe de broche (30), et le deuxième dispositif de positionnement (14) présentant de préférence un deuxième dispositif de guidage linéaire (10) s'étendant verticalement en direction orthogonale par rapport à l'axe de broche pour le guidage du dispositif de support de pièce d'oeuvre (11) par rapport à un bâti (2) du dispositif de forage profond, le premier dispositif de positionnement étant notamment guidé en étant fixé sur le bâti et le deuxième dispositif de positionnement étant guidé en étant mobile sur le premier dispositif de positionnement.

16. Dispositif de forage profond d'après une des revendications précédentes, **caractérisé en ce que** l'unité de forage profond (3) ne présente aucun dispositif de positionnement pour le déplacement du dispositif de support d'outil (11 ; 84) parallèlement ou sous un angle aigu par rapport à l'axe de broche (30 ; 79).

17. Dispositif de forage profond d'après une des revendications précédentes, **caractérisé en ce que** l'unité de forage profond (74) présente un dispositif de rotation de l'axe de broche (79), notamment d'un dispositif de support d'outil (76), autour d'un axe de rotation (75) vertical.

18. Dispositif de forage profond d'après une des revendications précédentes, **caractérisé en ce qu'**il présente un bâti (72) pour porter l'unité de forage profond (74) et un autre bâti (71) indépendant pour porter l'unité de soutien de pièce d'oeuvre (40).

19. Dispositif de forage profond d'après la revendication 17 ou 18, **caractérisé en ce que** l'axe de broche (30, 79) et la pièce d'oeuvre peuvent être horizontalement pivotés de manière réciproque dans deux directions inverses à partir d'une position de base, dans laquelle l'axe longitudinal de pièce d'oeuvre (42) est orthogonale par rapport à l'axe de broche (30 ; 79).

20. Dispositif de forage profond d'après une des revendications précédentes, **caractérisé en ce qu'**un dispositif de remplacement de guidage d'outil (34 ; 85) est prévu pour le remplacement automatique de guidages d'outil (37 ; 87) du dispositif de guidage d'outil.

21. Dispositif de forage profond d'après la revendication 20, **caractérisé en ce que** le dispositif de remplacement de guidage d'outil est associé à l'unité de soutien de pièce d'oeuvre (40), qu'il est notamment disposé de manière fixe sur celui-ci et qu'il peut être déplacé avec celui-ci, en présentant notamment un magasin pick-up, un magasin à disque ou en chaîne pour guidages d'outil.

22. Dispositif de forage profond d'après la revendication 13 ou 20, **caractérisé en ce que** le dispositif de guidage d'outil (85) présente au moins un support de guidages d'outil (86) logé de manière mobile, notamment linéairement mobile, avec plusieurs guidages d'outil (87) associés à un axe de broche et remplaçables par un mouvement du support de guidages d'outil, notamment un changeur linéaire multiple.

23. Dispositif de forage profond d'après une des revendications précédentes, **caractérisé en ce qu'**il possède au moins un dispositif de guidage d'outil (85) auquel est associé un dispositif collecteur (88) pour capter, en étant protégé contre les projections, les adjuvants de forage liquides et/ou les copeaux, le dispositif de guidage d'outil (85) présentant de préférence au moins un support de bague de perçage fermé.

24. Dispositif de forage profond d'après une des revendications précédentes, **caractérisé en ce qu'**un dispositif de changement d'outil (33) pour le remplacement automatique d'outils de forage profond (32) est prévu à l'arbre moteur (26), le dispositif de changement d'outil étant associé de préférence à l'unité de forage profond (3), étant notamment disposé de manière fixe au bâti (2) et étant accessible par déplacement du dispositif de support d'outil (11).

25. Dispositif de forage profond d'après la revendication 24, **caractérisé en ce que** le dispositif de remplacement de guidages d'outil (34) et le dispositif de changement d'outils (33) sont réalisés et disposés de telle manière qu'un remplacement d'outils de forage profond (32) et de guidages d'outil (37) associés peut être opéré simultanément.

26. Dispositif de forage profond d'après une des revendications précédentes, **caractérisé en ce que** l'unité de soutien de pièces d'oeuvre (40) est réalisée pour un logement simultané de plusieurs, notamment de deux pièces d'oeuvre (41) pouvant être usinées en même temps, les pièces d'oeuvre pouvant être disposées de préférence l'une au-dessus de l'autre, les axes longitudinaux de pièce d'oeuvre (42) étant parallèles.

27. Dispositif de forage profond d'après la revendication 26, **caractérisé en ce que** pour chaque pièce d'oeuvre (41) est prévu un moteur d'orientation (45 ; 125), qui peut être commandé de manière individuelle.

28. Dispositif de forage profond d'après une des revendications précédentes, **caractérisé en ce qu'**on prévoit plusieurs, notamment deux arbres moteurs (26) disposés l'un au-dessus de l'autre parallèlement à l'axe et/ou **en ce que** le dispositif de guidage d'outil présente plusieurs, notamment deux ou un nombre multiple de deux de guidages d'outil (37 ; 87) disposés l'un au-dessus de l'autre parallèlement à l'axe.
